(19) Europäisches Patentamt
European Patent Office
Office européen des brevets

(11) EP 4 696 759 A1

# (12) EUROPEAN PATENT APPLICATION

published in accordance with Art. 153(4) EPC

(43) Date of publication:
**18.02.2026 Bulletin 2026/08**

(21) Application number: **25773420.2**

(22) Date of filing: **14.03.2025**

(51) International Patent Classification (IPC):
***C09K 5/04*** *(2006.01)* ***F25B 1/00*** *(2006.01)*

(52) Cooperative Patent Classification (CPC):
**C09K 5/04; F25B 1/00**

(86) International application number:
**PCT/JP2025/009903**

(87) International publication number:
**WO 2025/197791 (25.09.2025 Gazette 2025/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.03.2024 JP 2024042703**

(71) Applicant: **Daikin Industries, Ltd.**
**Osaka-shi, Osaka 530-0001 (JP)**

(72) Inventors:
- **ITANO, Mitsushi**
  **Osaka-shi, Osaka 530-0001 (JP)**
- **GOTO, Tomoyuki**
  **Osaka-shi, Osaka 530-0001 (JP)**
- **YOSHIMURA, Takashi**
  **Osaka-shi, Osaka 530-0001 (JP)**
- **USUI, Takashi**
  **Osaka-shi, Osaka 530-0001 (JP)**
- **NAKAUE, Tsubasa**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

## (54) REFRIGERANT-CONTAINING COMPOSITION, USE THEREOF, REFRIGERATOR HAVING SAME, AND METHOD FOR OPERATING SAID REFRIGERATOR

(57) The present disclosure provides a novel low-GWP mixed refrigerant. Specifically, the present disclosure provides a composition comprising trans-1,2-difluoroethylene (HFO-1132(E)), propane, and 1,1-difluoroethylene (HFO-1132a) and optionally further comprising difluoromethane (R32), wherein the mixing ratio of each of these compounds is limited within a certain range.

EP 4 696 759 A1

## Description

Technical Field

The present disclosure relates to a composition comprising a refrigerant, use of the composition, a refrigerating machine having the composition, and a method for operating the refrigerating machine.

Background Art

As a working medium for heat cycles that can replace R410A, a working medium for heat cycles comprising trifluoroethylene (HFO-1123) and 1,2-difluoroethylene (HFO-1132) has been proposed (PTL 1).

Citation List

Patent Literature

PTL 1: WO2015/141678

Summary of Invention

Technical Problem

An object of the present disclosure is to provide a novel low-GWP mixed refrigerant.

Solution to Problem

Item 1.

A composition comprising a refrigerant,
the refrigerant comprising trans-1,2-difluoroethylene (HFO-1132(E)), propane, and 1,1-difluoroethylene (HFO-1132a) and optionally further comprising difluoromethane (R32),
wherein in the refrigerant, when the mass% of HFO-1132(E), R32, propane, and HFO-1132a based on their sum is respectively represented by x, y, z, and a (with the proviso that $0 < a \leq 10.0$), coordinates (x,y,z) in a ternary composition diagram in which the sum of HFO-1132(E), R32, and propane is (100 - a) mass% are within the range of a figure surrounded by straight lines CD, DR, RQ, QB, BA, and AC that connect the following 6 points:

point C (-a+60.0, 40.0, 0.0),
point D (-a+75.0, 0.0, 25.0),
point R ($0.0011a^2$-1.0794a+19.594, 0.0, -$0.0011a^2$+0.0794a+80.406),
point Q (0.0, -$0.0011a^2$-0.5366a+10.186, $0.0011a^2$-0.4634a+89.814),
point B (0.0, 44.2, -a+55.8), and
point A (-a+55.7, 44.3, 0.0)
or on the above straight lines CD, DR, RQ, and BA (excluding the points C, Q, B, and A).

Item 2.

The composition according to Item 1,
wherein the composition is an alternative composition for R410A.

Item 3.

A composition comprising a refrigerant,

the refrigerant comprising HFO-1132(E), propane, and HFO-1132a and optionally further comprising R32,
wherein in the refrigerant, when the mass% of HFO-1132(E), R32, propane, and HFO-1132a based on their sum is respectively represented by x, y, z, and a (with the proviso that $0 < a \leq 10.0$), coordinates (x,y,z) in a ternary composition diagram in which the sum of HFO-1132(E), R32, and propane is (100 - a) mass% are within the range of a figure surrounded by straight lines ID, DF, FE, EH, and HI that connect the following 5 points:

point I (-a+66.7, 22.1, 11.2),
point D (-a+75.0, 0.0, 25.0),
point F (-1.104a+20.72, 0.0, 0.104a+79.28),
point E (0.0, $0.0011a^2$-0.6234a+11.514, $-0.0011a^2$-0.3766a+88.486), and
point H (0.0, 21.9, -a+78.1)
or on the above straight lines ID, DF, FE, and HI (excluding the points E and H).

Item 4.

The composition according to Item 3,
wherein the composition is an alternative composition for R1234yf.

Item 5.

A composition comprising a refrigerant,
the refrigerant comprising HFO-1132(E), propane, and HFO-1132a and optionally further comprising R32,
wherein in the refrigerant, when the mass% of HFO-1132(E), R32, propane, and HFO-1132a based on their sum is respectively represented by x, y, z, and a (with the proviso that $0 < a \leq 10.0$), coordinates (x,y,z) in a ternary composition diagram in which the sum of HFO-1132(E), R32, and propane is (100 - a) mass% are within the range of a figure surrounded by straight lines ID, DM, ML, LH, and HI that connect the following 5 points when $0 < a \leq 5.0$:

point I (-a+66.7, 22.1, 11.2),
point D (-a+75.0, 0.0, 25.0),
point M ($0.136a^2$-1.74a+11.6, 0.0, $-0.136a^2$+0.74a+88.4),
point L (0.0, $0.0011a^2$-0.5994a+6.5943, $-0.0011a^2$-0.4006a+93.406), and
point H (0.0, 21.9, -a+78.1); and
the following 5 points when $5.0 < a \leq 10.0$,
point I (-a+66.7, 22.1, 11.2),
point D (-a+75.0, 0.0, 25.0),
point M ($-0.008a^2$-0.9a+11.0, 0.0, $0.008a^2$-0.1a+89.0),
point L (0.0, $0.0011a^2$-0.5994a+6.5943, $-0.0011a^2$-0.4006a+93.406), and
point H (0.0, 21.9, -a+78.1)
or on the above straight lines ID, DM, ML, and HI (excluding the points L and H).

Item 6.

The composition according to Item 5,
wherein the composition is an alternative composition for R404A.

Item 7.

A refrigeration method comprising operating a refrigeration cycle using the composition of any one of Items 1, 3, and 5.

Item 8.

A refrigeration apparatus comprising the composition of any one of Items 1, 3, and 5 as a working fluid.

Advantageous Effects of Invention

The refrigerant according to the present disclosure has a low GWP.

Brief Description of Drawings

Fig. 1 is a ternary diagram showing the composition of the refrigerant of the present disclosure.
Fig. 2 is a ternary diagram showing the composition of the refrigerant of the present disclosure.

Fig. 3 is a ternary diagram showing the composition of the refrigerant of the present disclosure.
Fig. 4 is a ternary diagram showing the composition of the refrigerant of the present disclosure.
Fig. 5 is a ternary diagram showing the composition of the refrigerant of the present disclosure.
Fig. 6 is a ternary diagram showing the composition of the refrigerant of the present disclosure.
Fig. 7 is a ternary diagram showing the composition of the refrigerant of the present disclosure.
Fig. 8 is a ternary diagram showing the composition of the refrigerant of the present disclosure.
Fig. 9 is a ternary diagram showing the composition of the refrigerant of the present disclosure.
Fig. 10 is a ternary diagram showing the composition of the refrigerant of the present disclosure.
Fig. 11 is a ternary diagram showing the composition of the refrigerant of the present disclosure.
Fig. 12 is a ternary diagram showing the composition of the refrigerant of the present disclosure.
Fig. 13 is a ternary diagram showing the composition of the refrigerant of the present disclosure.
Fig. 14 is a ternary diagram showing the composition of the refrigerant of the present disclosure.
Fig. 15 is a ternary diagram showing the composition of the refrigerant of the present disclosure.

Description of Embodiments

The present inventors conducted intensive studies to solve the above problem, and consequently found that various mixed refrigerant described below has the above properties.

The present disclosure has been completed as a result of further research based on this finding. The present disclosure includes the following embodiments.

Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC).

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, the term "airconditioning system for vehicles" is a type of refrigeration apparatus for use in vehicles, such as gasoline vehicles, hybrid vehicles, electric vehicles, and hydrogen vehicles. The airconditioning system for vehicles refers to a refrigeration apparatus that has a refrigeration cycle in which heat exchange is performed by an evaporator using a liquid refrigerant, the evaporated refrigerant gas is absorbed by a compressor, the adiabatically compressed refrigerant gas is cooled and liquefied with a condenser, the liquefied refrigerant is adiabatically expanded by passing it through an expansion valve, and then the refrigerant is supplied again in the form of a liquid to the evaporator.

In the present specification, the term "pressure" refers to absolute pressure unless otherwise specified.

1. Refrigerant

The refrigerant according to the present disclosure comprises trans-1,2-difluoroethylene (HFO-1132(E), E-HFO-1132), propane, and 1,1-difluoroethylene (HFO-1132a), and optionally further comprises difluoromethane (R32).
The refrigerant according to the present disclosure is a low-GWP mixed refrigerant.
In the refrigerant according to the present disclosure, the disproportionation reaction does not occur at 3 MPa and 150°C, and the refrigerant has a refrigerating capacity (Cap) ratio of 70% or more relative to R410A and a GWP of 300 or less in the following case:
when the mass% of HFO-1132(E), R32, propane, and HFO-1132a based on their sum is respectively represented by x, y, z, and a (with the proviso that $0 < a \leq 10.0$), coordinates (x,y,z) in a ternary composition diagram in which the sum of HFO-1132(E), R32, and propane is (100 - a) mass% are within the range of a figure surrounded by straight lines CD, DR, RQ, QB, BA, and AC that connect the following 6 points:

point C (-a+60.0, 40.0, 0.0),
point D (-a+75.0, 0.0, 25.0),
point R ($0.0011a^2$-1.0794a+19.594, 0.0, $-0.0011a^2$+0.0794a+80.406),
point Q (0.0, $-0.0011a^2$-0.5366a+10.186, $0.0011a^2$-0.4634a+89.814),
point B (0.0, 44.2, -a+55.8) and
point A (-a+55.7, 44.3, 0.0)
or on the above straight lines CD, DR, RQ, and BA (excluding the points C, Q, B, and A).

Thus, the above refrigerant can be used as an alternative refrigerant for R410A.
In the refrigerant according to the present disclosure, the disproportionation reaction does not occur at 3 MPa and 150°C, and the refrigerant has a refrigerating capacity (Cap) ratio of 200% or more relative to R1234yf and a GWP of 150 or less in the following case:
when the mass% of HFO-1132(E), R32, propane, and HFO-1132a based on their sum is respectively represented by x, y, z, and a (with the proviso that $0 < a \leq 10.0$), coordinates (x,y,z) in a ternary composition diagram in which the sum of HFO-1132(E), R32, and propane is (100 - a) mass% are within the range of a figure surrounded by straight lines ID, DF, FE, EH, and HI that connect the following 5 points:

point I (-a+66.7, 22.1, 11.2),
point D (-a+75.0, 0.0, 25.0),
point F (-1.104a+20.72, 0.0, 0.104a+79.28),
point E (0.0, $0.0011a^2$-0.6234a+11.514, $-0.0011a^2$-0.3766a+88.486), and
point H (0.0, 21.9, -a+78.1)
or on the above straight lines ID, DF, FE, and HI (excluding the points E and H).

Thus, the above refrigerant can be used as an alternative refrigerant for R1234yf.
In the refrigerant according to the present disclosure, the disproportionation reaction does not occur at 3 MPa and 150°C, and the refrigerant has a refrigerating capacity (Cap) ratio of 100% or more relative to R404A and a GWP of 150 or less in the following case:

when the mass% of HFO-1132(E), R32, propane, and HFO-1132a based on their sum is respectively represented by x, y, z, and a (with the proviso that $0 < a \leq 10.0$),
coordinates (x,y,z) in a ternary composition diagram in which the sum of HFO-1132(E), R32, and propane is (100 - a) mass% are within the range of a figure surrounded by straight lines ID, DM, ML, LH, and HI that connect the following 5 points when $0 < a \leq 5.0$:

point I (-a+66.7, 22.1, 11.2),
point D (-a+75.0, 0.0, 25.0),
point M ($0.136a^2$-1.74a+11.6, 0.0, $-0.136a^2$+0.74a+88.4),
point L (0.0, $0.0011a^2$-0.5994a+6.5943, $-0.0011a^2$-0.4006a+93.406), and
point H (0.0, 21.9, -a+78.1); and
the following 5 points when $5.0 < a \leq 10.0$,
point I (-a+66.7, 22.1, 11.2),
point D (-a+75.0, 0.0, 25.0),
point M ($-0.008a^2$-0.9a+11.0, 0.0, $0.008a^2$-0.1a+89.0),
point L (0.0, $0.0011a^2$-0.5994a+6.5943, $-0.0011a^2$-0.4006a+93.406), and

point H (0.0, 21.9, -a+78.1)
or on the above straight lines ID, DM, ML, and HI (excluding the points L and H).

Thus, the above refrigerant can be used as an alternative refrigerant for R404A.
The refrigerant according to the present disclosure may comprise HFO-1132(E) in an amount of 10 mass% or more, 20 mass% or more, 30 mass% or more, 40 mass% or more, or 50 mass% or more, based on the entire refrigerant.
The refrigerant according to the present disclosure may comprise propane in an amount of 10 mass% or more, 20 mass% or more, 30 mass% or more, 40 mass% or more, 50 mass% or more, 60 mass% or more, or 70 mass% or more, based on the entire refrigerant.
The refrigerant according to the present disclosure may further comprise additional refrigerants in addition to HFO-1132(E), R32, propane, and HFO-1132a, as long as the above properties and effects are not impaired. In this respect, in an embodiment, the refrigerant according to the present disclosure preferably comprises HFO-1132(E), R32, propane, and HFO-1132a in a total amount of 99.5 mass% or more, more preferably 99.75 mass% or more, even more preferably 99.9 mass%, still even more preferably 99.999 mass%, and most preferably 99.9999 mass% or more, based on the entire refrigerant. The refrigerant according to the present disclosure may essentially consist of HFO-1132(E), R32, propane, and HFO-1132a. In this case, the refrigerant according to the present disclosure may consist of HFO-1132(E), R32, propane, and HFO-1132a, as well as inevitable impurities. The refrigerant according to the present disclosure may consist of HFO-1132(E), R32, propane, and HFO-1132a.
Such additional refrigerants are not limited, and can be selected from a wide range of refrigerants. The mixed refrigerant may comprise a single additional refrigerant, or two or more additional refrigerants.
Examples of additional refrigerants include acetylene, HFO-1141, HFO-1123, HFC-143a, HFC-134a, Z-HFO-1132, HFO-1243zf, HFC-245cb, HCFC-1122, HCFC-124, CFC-1113, and 3,3,3-trifluoropropyne.

2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.
The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.
The composition according to the present disclosure also comprises a composition containing a refrigerant, wherein the refrigerant contains HFO-1132(E), R32, R1234yf, and water in an amount of 0.1% or less.

2.2. Tracer

A tracer is added to the refrigerant composition according to the present disclosure at a detectable concentration such that when the refrigerant composition has been diluted, contaminated, or undergone other changes, the tracer can trace the changes.
The refrigerant composition according to the present disclosure may comprise a single tracer, or two or more tracers.
The tracer is not limited, and can be suitably selected from commonly used tracers.
Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3F$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152 (1,2-difluoroethane, $CH_2FCH_2F$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2$=CClF)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The refrigerant composition according to the present disclosure may contain tracers at a total concentration of about 10 parts per million by weight (ppm) or more based on the entire refrigerant composition. The refrigerant composition according to the present disclosure may also contain tracers at a total concentration of about 1000 ppm or less based on the entire refrigerant composition. The refrigerant composition according to the present disclosure may preferably contain tracers at a total concentration of about 30 ppm or more, and more preferably about 50 ppm or more, based on the entire refrigerant composition. The refrigerant composition according to the present disclosure may preferably contain tracers at a total concentration of about 500 ppm or less, and more preferably about 300 ppm or less, based on the entire refrigerant composition.

### 2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is preferably 0.01 mass% or more, and more preferably 0.05 mass% or more, based on the entire refrigerant. The content of the stabilizer is preferably 5 mass% or less, and more preferably 2 mass% or less, based on the entire refrigerant.

2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is preferably 0.01 mass% or more, and more preferably 0.05 mass% or more, based on the entire refrigerant. The content of the polymerization inhibitor is preferably 5 mass% or less, and more preferably 2 mass% or less, based on the entire refrigerant.

3. Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 mass% or more of refrigeration oil. The refrigeration oil-containing working fluid generally comprises 50 mass% or less of refrigeration oil.

3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extremepressure agents, acid scavengers, oxygen scavengers, copper deactivators, rust inhibitors, oil agents, and antifoaming agents.

A refrigeration oil with a kinematic viscosity of 5 cSt or more at 40°C is preferable from the standpoint of lubrication. Further, a refrigeration oil with a kinematic viscosity of 400 cSt or less at 40°C is preferable from the standpoint of lubrication.

The refrigeration oil-containing working fluid according to the present disclosure may further optionally contain at least one additive. Examples of additives include compatibilizing agents described below.

3.2. Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

5. Method for Suppressing Disproportionation Reaction

The method for suppressing disproportionation reaction according to the present disclosure is a method for suppressing the disproportionation reaction of HFO-1132(E), comprising operating a refrigeration cycle using the refrigerant according to the present disclosure.
The method for suppressing disproportionation reaction according to the present disclosure exhibits an effect that the disproportionation reaction of HFO-1132(E) does not occur particularly even when the pressure of the refrigerant is 3.0 MPa and the temperature of the refrigerant is 150°C.
The method for suppressing disproportionation reaction according to the present disclosure makes it possible to operate a refrigeration cycle, particularly in a refrigerating machine without any means for suppressing disproportionation reaction, by suppressing the disproportionation reaction.

6. Use for Suppressing Disproportionation Reaction

The use according to the present disclosure is use of R32, propane, and HFO-1132a for suppressing the disproportionation reaction of HFO-1132(E), wherein the disproportionation reaction is suppressed by mixing R32, propane, HFO-1132a, and HFO-1132(E) at a mixing ratio as in the refrigerant according to the present disclosure.
The use for suppressing disproportionation reaction according to the present disclosure exhibits an effect such that the disproportionation reaction of HFO-1132(E) does not occur particularly even when the pressure of the refrigerant is 3.0 MPa and the temperature of the refrigerant is 150°C.
The embodiments are described above; however, it will be understood that various changes in forms and details can be made without departing from the spirit and scope of the claims.

Examples

The present disclosure is described in more detail below with reference to Examples. However, the present disclosure is not limited to the Examples.
Mixed refrigerants were prepared by mixing HFO-1132(E), R32, propane, and HFO-1132a at mass% shown in Table 1 based on their sum.
For each of these mixed refrigerants, the occurrence of disproportionation reaction was examined using the following test method and test conditions.

Test method

The refrigerant composition to be tested was transferred into a test container and heated to 150°C, and then voltage was applied to a Pt wire inside the container to melt it, thereby applying 30 J of energy to the refrigerant composition. The occurrence of disproportionation reaction was determined based on the rapid rise in pressure and temperature inside the device.

Test conditions

Test container: 38 cc SUS container

Test temperature: 150°C

Pressure: 3 MPa

Determination criteria:

Non-explosion: The temperature or pressure after melting the Pt wire was less than two-fold, and rapid disproportionation reaction did not occur.
Explosion: The temperature or pressure after melting the Pt wire reached two-fold or more, and rapid disproportionation reaction occurred.

Table 1

| Item | Unit | Experiment series 1 | | | Experiment series 2 | | | | | Experiment series 3 | | |
|---|---|---|---|---|---|---|---|---|---|---|---|---|
| | | Ex. 1-1 | Ex. 1-2 | Ex. 1-3 | Ex. 2-1 | Ex. 2-2 | Ex. 2-3 | Ex. 2-4 | Ex. 2-5 | Ex. 3-1 | Ex. 3-2 | Ex. 3-3 |
| HFO-1132 (E) | Mass% | 62.0 | 60.0 | 58.0 | 69.5 | 69.5 | 67.5 | 65.5 | 65.5 | 77.0 | 75.0 | 73.0 |
| R32 | Mass% | 38.0 | 40.0 | 42.0 | 20.0 | 18.0 | 20.0 | 20.0 | 22.0 | 0.0 | 0.0 | 0.0 |
| Propane | Mass% | 0.0 | 0.0 | 0.0 | 10.5 | 12.5 | 12.5 | 14.5 | 12.5 | 23.0 | 25.0 | 27.0 |
| Disproportionation reaction (3 Mpa) | - | Explosion | Non-explosion | Non-explosion | Explosion | Explosion | Non-explosion | Non-explosion | Non-explosion | Explosion | Non-explosion | Non-explosion |

| item | Unit | Experiment series 1 | | | Experiment series 2 | | | | | Experiment series 3 | | |
|---|---|---|---|---|---|---|---|---|---|---|---|---|
| | | Ex. 1-4 | Ex. 1-5 | Ex. 1-6 | Ex. 2-6 | Ex. 2-7 | Ex. 2-8 | Ex. 2-9 | Ex. 2-10 | Ex. 3-4 | Ex. 3-5 | Ex. 3-6 |
| HFO-1132 (E) | Mass% | 59.5 | 57.5 | 55.5 | 67.0 | 67.0 | 65.0 | 63.0 | 63.0 | 74.5 | 72.5 | 70.5 |
| R32 | Mass% | 38.0 | 40.0 | 42.0 | 20.0 | 18.0 | 20.0 | 20.0 | 22.0 | 0.0 | 0.0 | 0.0 |
| Propane | Mass% | 0.0 | 0.0 | 0.0 | 10.5 | 12.5 | 12.5 | 14.5 | 12.5 | 23.0 | 25.0 | 27.0 |
| HFO-1132a | Mass% | 2.5 | 2.5 | 2.5 | 2.5 | 2.5 | 2.5 | 2.5 | 2.5 | 2.5 | 2.5 | 2.5 |
| Disproportionation reaction (3 Mpa) | | Explosion | Non-explosion | Non-explosion | Explosion | Explosion | Non-explosion | Non-explosion | Non-explosion | Explosion | Non-explosion | Non-explosion |

| item | Unit | Experiment series **1** | | | Experiment series 2 | | | | | Experiment series 3 | | |
|---|---|---|---|---|---|---|---|---|---|---|---|---|
| | | Ex. 1-7 | Ex. 1-8 | Ex. 1-9 | Ex. 2-11 | ' Ex. 2-12 | Ex. 2-13 | Ex. 2-14 | Ex. 2-15 | Ex. 3-7 | Ex. 3-8 | Ex. 3-9 |
| HFO-1132 (E) | Mass% | 57.0 | 55.0 | 53.0 | 64.5 | 64.5 | 62.5 | 60.5 | 60.5 | 72.0 | 70.0 | 68.0 |
| R32 | Mass% | 38.0 | 40.0 | 42.0 | 20.0 | 18.0 | 20.0 | 20.0 | 22.0 | 0.0 | 0.0 | 0.0 |
| Propane | Mass% | 0.0 | 0.0 | 0.0 | 10.5 | 12.5 | 12.5 | 14.5 | 12.5 | 23.0 | 25.0 | 27.0 |
| HFO-1132a | Mass% | 5.0 | 5.0 | 5.0 | 5.0 | 5.0 | 5.0 | 5.0 | 5.0 | 5.0 | 5.0 | 5.0 |
| Disproportionation reaction (3 Mpa) | | Explosion | Non-explosion | Non-explosion | Explosion | Explosion | Non-explosion | Non-explosion | Non-explosion | Explosion | Non-explosion | Non-explosion |

Table 2

| Item | Unit | Experiment series 1 | | | Experiment series 2 | | | | | Experiment series 3 | | |
|---|---|---|---|---|---|---|---|---|---|---|---|---|
| | | Ex. 1-10 | Ex. 1-11 | Ex. 1-12 | Ex. 2-16 | Ex. 2-17 | Ex.2-18 | Ex. 2-19 | Ex. 2-20 | Ex. 3-10 | Ex. 3-11 | Ex. 3-12 |
| HFO-1132 (E) | Mass% | 54.5 | 52.5 | 50.5 | 62.0 | 62.0 | 60.0 | 58.0 | 58.0 | 69.5 | 67.5 | 65.5 |
| R32 | Mass% | 38.0 | 40.0 | 42.0 | 20.0 | 18.0 | 20.0 | 20.0 | 22.0 | 0.0 | 0.0 | 0.0 |
| Propane | Mass% | 0.0 | 0.0 | 0.0 | 10.5 | 12.5 | 12.5 | 14.5 | 12.5 | 23.0 | 25.0 | 27.0 |
| HFO-1132a | Mass% | 7.5 | 7.5 | 7.5 | 7.5 | 7.5 | 7.5 | 7.5 | 7.5 | 7.5 | 7.5 | 7.5 |
| Disproportionation reaction (3 Mpa) | - | Explosion | Non-ex-plosion | Non-ex-plosion | Explosion | Explosion | Non-ex-plosion | Non-ex-plosion | Non-ex-plosion | Explosion | Non-ex-plosion | Non-ex-plosion |
| Ex. 1-13 | Ex. 1-14 | Ex. 1-15 | Ex. 2-21 | Ex. 2-22 | Ex. 2-23 | Ex. 2-24 | Ex. 2-25 | Ex. 3-13 | Ex. 3-14 | Ex. 3-15 | | |
| HFO-1132 (E) | Mass% | 52.0 | 50.0 | 48.0 | 59.5 | 59.5 | 57.5 | 55.5 | 55.5 | 67.0 | 65.0 | 63.0 |
| R32 | Mass% | 38.0 | 40.0 | 42.0 | 20.0 | 18.0 | 20.0 | 20.0 | 22.0 | 0.0 | 0.0 | 0.0 |
| Propane | Mass% | 0.0 | 0.0 | 0.0 | 10.5 | 12.5 | 12.5 | 14.5 | 12.5 | 23.0 | 25.0 | 27.0 |
| HFO-1132a | Mass% | 10.0 | 10.0 | 10.0 | 10.0 | 10.0 | 10.0 | 10.0 | 10.0 | 10.0 | 10.0 | 10.0 |
| Disproportionation reaction (3 Mpa) | - | Explosion | Non-ex-plosion | Non-ex-plosion | Explosion | Explosion | Non-ex-plosion | Non-ex-plosion | Non-ex-plosion | Explosion | Non-ex-plosion | Non-ex-plosion |

The results in Tables 1 and 2 show that the refrigerant according to the present disclosure does not undergo disproportionation in the region shown in the ternary diagram shown in Fig. 1.

The GWP of each mixed refrigerant was evaluated, with the GWP of HFO-1132(E) being 1 and the GWP of each of R32, propane, and HFO-1132a being based on the values stated in the Intergovernmental Panel on Climate Change (IPCC), fourth report. Further, the COP, refrigerating capacity, discharge temperature, and boiling point of each mixed refrigerant were determined by performing theoretical refrigeration cycle calculations for the mixed refrigerants using the National Institute of Science and Technology (NIST) Reference Fluid Thermodynamic and Transport Properties Database (Refprop 10.0) under the following conditions. The physical property data of HFO-1132(E) was determined by actual measurements.

<u>Ratio relative to R410A</u>
Evaporating temperature: 5°C
Condensation temperature: 45°C
Superheat temperature: 5K
Supercooling temperature: 5K
Compressor efficiency: 70%
<u>Ratio relative to R1234yf</u>
Evaporating temperature: -30°C
Condensation temperature: 30°C
Superheat temperature: 5K
Supercooling temperature: 5K
Compressor efficiency: 70%
<u>Ratio relative to R404A</u>
Evaporating temperature: -40°C
Condensation temperature: 40°C
Superheat temperature: 20K
Supercooling temperature: 0K
Compressor efficiency: 70%

In the following Tables, the "COP ratio" and the "refrigerating capacity ratio" are each a ratio (%) relative to each designated refrigerant.

In the Tables, the "boiling point (°C)" means a temperature at which the liquid phase of the mixed refrigerant has atmospheric pressure (101.33 kPa).

The following Tables show these values together with the GWP of each mixed refrigerant. The COP and the refrigerating capacity are ratios relative to R410A.

The coefficient of performance (COP) was determined by the following formula.

COP = (refrigerating capacity or heating capacity)/power consumption

Table 3

| Item | Unit | Comp. Ex. 1 | Comp. Ex. 1-1 | Comp. Ex. 1-2 | Comp. Ex. 1-3 | Comp. Ex. 1-4 | Comp. Ex. 1-5 | Comp. Ex. 1-6 |
|---|---|---|---|---|---|---|---|---|
| | | | C | D | A | B | Q | R |
| E-HFO-1132 | Mass% | R410A | 60.0 | 75.0 | 55.7 | 0.0 | 0.0 | 19.6 |
| R32 | Mass% | | 40.0 | 0.0 | 44.3 | 44.2 | 10.2 | 0.0 |
| Propane | Mass% | | 0.0 | 25.0 | 0.0 | 55.8 | 89.8 | 80.4 |
| HFO-1132a | Mass% | | 0.0 | 0.0 | 0.0 | 0.0 | 0.0 | 0.0 |
| GWP | - | 2088 | 271 | 2 | 300 | 300 | 72 | 3 |
| COP ratio | % (relative to R410A) | 100.0 | 100.6 | 98.6 | 100.8 | 96.4 | 103.2 | 104.2 |
| Refrigerating capacity ratio | % (relative to R410A) | 100.0 | 109.5 | 95.9 | 110.1 | 98.5 | 70.0 | 70.0 |

Table 4

| Item | Unit | Comp. Ex. 1 | Comp. Ex. 2-1 | Ex. 2-1 | Comp. Ex. 2-2 | Comp. Ex. 2-3 | Comp. Ex. 2-4 | Ex. 2-2 |
|---|---|---|---|---|---|---|---|---|
| | | | C | D | A | B | Q | R |
| E-HFO-1132 | Mass% | R410A | 57.5 | 72.5 | 53.2 | 0.0 | 0.0 | 16.9 |
| R32 | Mass% | | 40.0 | 0.0 | 44.3 | 44.2 | 8.8 | 0.0 |
| Propane | Mass% | | 0.0 | 25.0 | 0.0 | 53.3 | 88.7 | 80.6 |
| HFO-1132a | Mass% | | 2.5 | 2.5 | 2.5 | 2.5 | 2.5 | 2.5 |
| GWP | - | 2088 | 271 | 2 | 300 | 300 | 62 | 3 |
| COP ratio | % (relative to R410A) | 100.0 | 100.2 | 98.3 | 100.3 | 95.7 | 103.3 | 104.1 |
| Refrigerating capacity ratio | % (relative to R410A) | 100.0 | 111.4 | 96.8 | 112.1 | 99.9 | 70.0 | 70.0 |

Table 5

| Item | Unit | Comp. Ex. 1 | Comp. Ex. 3-1 | Ex. 3-1 | Comp. Ex. 3-2 | Comp. Ex. 3-3 | Comp. Ex. 3-4 | Ex. 3-2 |
|---|---|---|---|---|---|---|---|---|
| | | | C | D | A | B | Q | R |
| E-HFO-1132 | Mass% | R410A | 55.0 | 70.0 | 50.7 | 0.0 | 0.0 | 14.2 |
| R32 | Mass% | | 40.0 | 0.0 | 44.3 | 44.2 | 7.5 | 0.0 |
| Propane | Mass% | | 0.0 | 25.0 | 0.0 | 50.8 | 87.5 | 80.8 |
| HFO-1132a | Mass% | | 5.0 | 5.0 | 5.0 | 5.0 | 5.0 | 5.0 |
| GWP | - | 2088 | 271 | 2 | 300 | 300 | 53 | 3 |
| COP ratio | % (relative to R410A) | 100.0 | 99.7 | 98.1 | 99.8 | 94.2 | 103.3 | 104.0 |
| Refrigerating capacity ratio | % (relative to R410A) | 100.0 | 113.3 | 97.8 | 114.0 | 101.0 | 70.0 | 70.0 |

Table 6

| Item | Unit | Comp. Ex. 1 | Comp. Ex. 4-1 | Ex. 4-1 | Comp. Ex. 4-2 | Comp. Ex. 4-3 | Comp. Ex. 4-4 | Ex. 4-2 |
|---|---|---|---|---|---|---|---|---|
| | | | C | D | A | B | Q | R |
| E-HFO-1132 | Mass% | R410A | 52.5 | 67.5 | 48.2 | 0.0 | 0.0 | 11.6 |
| R32 | Mass% | | 40.0 | 0.0 | 44.3 | 44.2 | 6.1 | 0.0 |
| Propane | Mass% | | 0.0 | 25.0 | 0.0 | 48.3 | 86.4 | 80.9 |
| HFO-1132a | Mass% | | 7.5 | 7.5 | 7.5 | 7.5 | 7.5 | 7.5 |
| GWP | - | 2088 | 271 | 2 | 300 | 300 | 44 | 3 |
| COP ratio | % (relative to R410A) | 100.0 | 99.2 | 97.8 | 99.3 | 94.3 | 103.3 | 104.0 |
| Refrigerating capacity ratio | % (relative to R410A) | 100.0 | 115.3 | 98.7 | 115.9 | 102.9 | 70.0 | 70.0 |

Table 7

| Item | Unit | Comp. Ex. 1 | Comp. Ex. 5-1 | Ex. 5-1 | Comp. Ex. 5-2 | Comp. Ex. 5-3 | Comp. Ex. 5-4 | Ex. 5-2 |
|---|---|---|---|---|---|---|---|---|
| | | | C | D | A | B | Q | R |
| E-HFO-1132 | Mass% | R410A | 50.0 | 65.0 | 45.7 | 0.0 | 0.0 | 8.9 |
| R32 | Mass% | | 40.0 | 0.0 | 44.3 | 44.2 | 4.7 | 0.0 |
| Propane | Mass% | | 0.0 | 25.0 | 0.0 | 45.8 | 85.3 | 81.1 |
| HFO-1132a | Mass% | | 10.0 | 10.0 | 10.0 | 10.0 | 10.0 | 10.0 |
| GWP | - | 2088 | 271 | 2 | 300 | 300 | 34 | 3 |
| COP ratio | % (relative to R410A) | 100.0 | 98.6 | 97.5 | 98.7 | 95.0 | 103.3 | 103.9 |
| Refrigerating capacity ratio | % (relative to R410A) | 100.0 | 117.2 | 99.7 | 117.8 | 105.1 | 70.0 | 70.0 |

The coordinates of each point were calculated based on the least squares method as follows.

Table 8

| Point C | | | | | |
|---|---|---|---|---|---|
| a=HFO-1132a | 0.0 | 2.5 | 5.0 | 7.5 | 10.0 |
| x=E-HFO-1132 | 60.0 | 57.5 | 55.0 | 52.5 | 50.0 |
| y=R32 | 40.0 | 40.0 | 40.0 | 40.0 | 40.0 |
| z=Propane | 0.0 | 0.0 | 0.0 | 0.0 | 0.0 |
| Approximate expression for x based on a | -a+60.0 | | | | |
| Approximate expression for y based on a | 40.0 | | | | |
| Approximate expression for z based on a | 0.0 | | | | |

Table 9

| Point D | | | | | |
|---|---|---|---|---|---|
| a=HFO-1132a | 0.0 | 2.5 | 5.0 | 7.5 | 10.0 |
| x=E-HFO-1132 | 75.0 | 72.5 | 70.0 | 67.5 | 65.0 |
| y=R32 | 0.0 | 0.0 | 0.0 | 0.0 | 0.0 |
| z=Propane | 25.0 | 25.0 | 25.0 | 25.0 | 25.0 |
| Approximate expression for x based on a | -a+75.0 | | | | |
| Approximate expression for y based on a | 0.0 | | | | |
| Approximate expression for z based on a | 25.0 | | | | |

Table 10

| Point A | | | | | |
|---|---|---|---|---|---|
| a=HFO-1132a | 0.0 | 2.5 | 5.0 | 7.5 | 10.0 |
| x=E-HFO-1132 | 55.7 | 53.2 | 50.7 | 48.2 | 45.7 |
| y=R32 | 44.3 | 44.3 | 44.3 | 44.3 | 44.3 |
| z=Propane | 0.0 | 0.0 | 0.0 | 0.0 | 0.0 |

(continued)

| Point A | |
|---|---|
| Approximate expression for x based on a | -a+55.7 |
| Approximate expression for y based on a | 44.3 |
| Approximate expression for z based on a | 0.0 |

Table 11

| Point B | | | | | |
|---|---|---|---|---|---|
| a=HFO-1132a | 0.0 | 2.5 | 5.0 | 7.5 | 10.0 |
| x=E-HFO-1132 | 0.0 | 0.0 | 0.0 | 0.0 | 0.0 |
| y=R32 | 44.2 | 44.2 | 44.2 | 44.2 | 44.2 |
| z=Propane | 55.8 | 53.3 | 50.8 | 48.3 | 45.8 |
| Approximate expression for x based on a | 0.0 | | | | |
| Approximate expression for y based on a | 44.2 | | | | |
| Approximate expression for z based on a | -a+55.8 | | | | |

Table 12

| Point Q | | | | | |
|---|---|---|---|---|---|
| a=HFO-1132a | 0.0 | 2.5 | 5.0 | 7.5 | 10.0 |
| x=E-HFO-1132 | 0.0 | 0.0 | 0.0 | 0.0 | 0.0 |
| y=R32 | 10.2 | 8.8 | 7.5 | 6.1 | 4.7 |
| z=Propane | 89.8 | 88.7 | 87.5 | 86.4 | 85.3 |
| Approximate expression for x based on a | 0.0 | | | | |
| Approximate expression for y based on a | $-0.0011a^2 -0.5366a+10.186$ | | | | |
| Approximate expression for z based on a | $-0.0011a^2 -0.4634a+89.814$ | | | | |

Table 13

| Point R | | | | | |
|---|---|---|---|---|---|
| a=HFO-1132a | 0.0 | 2.5 | 5.0 | 7.5 | 10.0 |
| x=E-HFO-1132 | 19.6 | 16.9 | 14.2 | 11.6 | 8.9 |
| y=R32 | 0.0 | 0.0 | 0.0 | 0.0 | 0.0 |
| z=Propane | 80.4 | 80.6 | 80.8 | 80.9 | 81.1 |
| Approximate expression for x based on a | $0.0011a^2-1.0794a+19.594$ | | | | |
| Approximate expression for y based on a | 0.0 | | | | |
| Approximate expression for z based on a | $-0.0011a^2+0.0794a+80.406$ | | | | |

The above results show that in the refrigerant according to the present disclosure, the disproportionation reaction does not occur at 3 MPa and 150°C, and the refrigerant has a refrigerating capacity (Cap) ratio of 70% or more relative to R410A and a GWP of 300 or less in the following case:
when the mass% of HFO-1132(E), R32, propane, and HFO-1132a based on their sum is respectively represented by x, y, z, and a (with the proviso that $0 < a \leq 10.0$), coordinates (x,y,z) in a ternary composition diagram in which the sum of HFO-1132(E), R32, and propane is (100 - a) mass% are within the range of a figure surrounded by straight lines CD, DR, RQ, QB, BA, and AC that connect the following 6 points:

point C (-a+60.0, 40.0, 0.0),

point D (-a+75.0, 0.0, 25.0),

point R ($0.0011a^2-1.0794a+19.594$, 0.0, $-0.0011a^2+0.0794a+80.406$),

point Q (0.0, $-0.0011a^2-0.5366a+10.186$, $0.0011a^2-0.4634a+89.814$),

point B (0.0, 44.2, -a+55.8), and

point A (-a+55.7, 44.3, 0.0)

or on the above straight lines CD, DR, RQ, and BA (excluding the points C, Q, B, and A).

A similar test was conducted relative to R1234yf instead.

Table 14

| Item | Unit | Comp. Ex. 2 | Comp. Ex. 1-7 | Comp. Ex. 1-8 | Comp. Ex. 1-9 | Comp. Ex. 1-10 | Comp. Ex. 1-11 | Comp. Ex. 1-12 | Comp. Ex. 1-13 |
|---|---|---|---|---|---|---|---|---|---|
| | | | C | D | G | H | I | E | F |
| E-HFO-1132 | Mass% | R1234yf | 60.0 | 75.0 | 77.9 | 0.0 | 66.7 | 0.0 | 20.7 |
| R32 | Mass% | | 40.0 | 0.0 | 22.1 | 21.9 | 22.1 | 11.5 | 0.0 |
| Propane | Mass% | | 0.0 | 25.0 | 0.0 | 78.1 | 11.2 | 88.5 | 79.3 |
| HFO-1132a | Mass% | | 0.0 | 0.0 | 0.0 | 0.0 | 0.0 | 0.0 | 0.0 |
| GWP | - | 4 | 271 | 2 | 150 | 150 | 150 | 80 | 3 |
| COP ratio | % (relative to R1234yf) | 100.0 | 101 | 99 | 100 | 101 | 99 | 102 | 103 |
| Refrigerating capacity ratio | % (relative to R1234yf) | 100.0 | 312 | 284 | 302 | 234 | 314 | 200 | 200 |

Table 15

| Item | Unit | Comp. Ex. 2 | Comp. Ex. 2-5 | Ex. 2-3 | Comp. Ex. 2-6 | Comp. Ex. 2-7 | Ex. 2-4 | Comp. Ex. 2-8 | Ex. 2-5 |
|---|---|---|---|---|---|---|---|---|---|
| | | | C | D | G | H | I | E | F |
| E-HFO-1132 | Mass% | R1234yf | 57.5 | 72.5 | 75.4 | 0.0 | 64.2 | 0.0 | 18.0 |
| R32 | Mass% | | 40.0 | 0.0 | 22.1 | 21.9 | 22.1 | 10.0 | 0.0 |
| Propane | Mass% | | 0.0 | 25.0 | 0.0 | 75.6 | 11.2 | 87.5 | 79.5 |
| HFO-1132a | Mass% | | 2.5 | 2.5 | 2.5 | 2.5 | 2.5 | 2.5 | 2.5 |
| GWP | - | 4 | 271 | 2 | 150 | 150 | 150 | 70 | 3 |
| COP ratio | % (relative to R1234yf) | 100.0 | 100 | 99 | 100 | 101 | 98 | 102 | 103 |
| Refrigerating capacity ratio | % (relative to R1234yf) | 100.0 | 319 | 287 | 309 | 240 | 320 | 200 | 200 |

Table 16

| Item | Unit | Comp. Ex. 2 | Comp. Ex. 3-5 | Ex. 3-3 | Comp. Ex. 3-6 | Comp. Ex. 3-7 | Ex. 3-4 | Comp. Ex. 3-8 | Ex. 3-5 |
|---|---|---|---|---|---|---|---|---|---|
| | | | C | D | G | H | I | E | F |
| E-HFO-1132 | Mass% | R1234yf | 55.0 | 70.0 | 72.9 | 0.0 | 61.7 | 0.0 | 15.2 |
| R32 | Mass% | | 40.0 | 0.0 | 22.1 | 21.9 | 22.1 | 8.4 | 0.0 |
| Propane | Mass% | | 0.0 | 25.0 | 0.0 | 73.1 | 11.2 | 86.6 | 79.8 |
| HFO-1132a | Mass% | | 5.0 | 5.0 | 5.0 | 5.0 | 5.0 | 5.0 | 5.0 |
| GWP | - | 4 | 271 | 2 | 150 | 150 | 150 | 59 | 3 |
| COP ratio | % (relative to R1234yf) | 100.0 | 100 | 99 | 100 | 101 | 98 | 102 | 102 |
| Refrigerating capacity ratio | % (relative to R1234yf) | 100.0 | 325 | 291 | 315 | 246 | 325 | 200 | 200 |

Table 17

| Item | Unit | Comp. Ex. 2 | Comp. Ex. 4-5 | Ex. 4-3 | Comp. Ex. 4-6 | Comp. Ex. 4-7 | Ex. 4-4 | Comp. Ex. 4-8 | Ex. 4-5 |
|---|---|---|---|---|---|---|---|---|---|
| | | | C | D | G | H | I | E | F |
| E-HFO-1132 | Mass% | R1234yf | 52.5 | 67.5 | 70.4 | 0.0 | 59.2 | 0.0 | 12.4 |
| R32 | Mass% | | 40.0 | 0.0 | 22.1 | 21.9 | 22.1 | 6.9 | 0.0 |
| Propane | Mass% | | 0.0 | 25.0 | 0.0 | 70.6 | 11.2 | 85.6 | 80.1 |
| HFO-1132a | Mass% | | 7.5 | 7.5 | 7.5 | 7.5 | 7.5 | 7.5 | 7.5 |
| GWP | - | 4 | 271 | 2 | 150 | 150 | 150 | 49 | 3 |
| COP ratio | % (relative to R1234yf) | 100.0 | 100 | 98 | 99 | 101 | 98 | 102 | 102 |
| Refrigerating capacity ratio | % (relative to R1234yf) | 100.0 | 332 | 295 | 322 | 252 | 331 | 200 | 200 |
| Item | Unit | Comp. Ex. 2 | Comp. Ex. 5-5 | Ex. 5-3 | Comp. Ex. 5-6 | Comp. Ex. 5-7 | Ex. 5-4 | Comp. Ex. 5-8 | Ex. 5-5 |
| | | | C | D | G | H | I | E | F |
| E-HFO-1132 | Mass% | R1234yf | 50.0 | 65.0 | 67.9 | 0.0 | 56.7 | 0.0 | 9.7 |
| R32 | Mass% | | 40.0 | 0.0 | 22.1 | 21.9 | 22.1 | 5.4 | 0.0 |
| Propane | Mass% | | 0.0 | 25.0 | 0.0 | 68.1 | 11.2 | 84.6 | 80.3 |
| HFO-1132a | Mass% | | 10.0 | 10.0 | 10.0 | 10.0 | 10.0 | 10.0 | 10.0 |
| GWP | - | 4 | 271 | 2 | 150 | 150 | 150 | 39 | 3 |
| COP ratio | % (relative to R1234yf) | 100.0 | 99 | 98 | 99 | 101 | 98 | 102 | 102 |
| Refrigerating capacity ratio | % (relative to R1234yf) | 100.0 | 339 | 299 | 329 | 258 | 337 | 200 | 200 |

The coordinates of each point were calculated based on the least squares method as follows.

Table 18

| Point G | | | | | |
|---|---|---|---|---|---|
| a=HFO-1132a | 0.0 | 2.5 | 5.0 | 7.5 | 10.0 |
| x=E-HFO-1132 | 77.9 | 75.4 | 72.9 | 70.4 | 67.9 |
| y=R32 | 22.1 | 22.1 | 22.1 | 22.1 | 22.1 |
| z=Propane | 0.0 | 0.0 | 0.0 | 0.0 | 0.0 |
| Approximate expression for x based on a | -a+77.9 | | | | |
| Approximate expression for y based on a | 22.1 | | | | |
| Approximate expression for z based on a | 0.0 | | | | |

Table 19

| Point H | | | | | |
|---|---|---|---|---|---|
| a=HFO-1132a | 0.0 | 2.5 | 5.0 | 7.5 | 10.0 |
| x=E-HFO-1132 | 0.0 | 0.0 | 0.0 | 0.0 | 0.0 |
| y=R32 | 21.9 | 21.9 | 21.9 | 21.9 | 21.9 |
| z=Propane | 78.1 | 75.6 | 73.1 | 70.6 | 68.1 |
| Approximate expression for x based on a | 0.0 | | | | |
| Approximate expression for y based on a | 21.9 | | | | |
| Approximate expression for z based on a | -a+78.1 | | | | |

Table 20

| Point I | | | | | |
|---|---|---|---|---|---|
| a=HFO-1132a | 0.0 | 2.5 | 5.0 | 7.5 | 10.0 |
| x=E-HFO-1132 | 66.7 | 64.2 | 61.7 | 59.2 | 56.7 |
| y=R32 | 22.1 | 22.1 | 22.1 | 22.1 | 22.1 |
| z=Propane | 11.2 | 11.2 | 11.2 | 11.2 | 11.2 |
| Approximate expression for x based on a | -a+66.7 | | | | |
| Approximate expression for y based on a | 22.1 | | | | |
| Approximate expression for z based on a | 11.2 | | | | |

Table 21

| Point E | | | | | |
|---|---|---|---|---|---|
| a=HFO-1132a | 0.0 | 2.5 | 5.0 | 7.5 | 10.0 |
| x=E-HFO-1132 | 0.0 | 0.0 | 0.0 | 0.0 | 0.0 |
| y=R32 | 11.5 | 10.0 | 8.4 | 6.9 | 5.4 |
| z=Propane | 88.5 | 87.5 | 86.6 | 85.6 | 84.6 |
| Approximate expression for x based on a | 0.0 | | | | |
| Approximate expression for y based on a | $0.0011a^2-0.6234a+11.514$ | | | | |
| Approximate expression for z based on a | $-0.0011a^2-0.3766a+88.486$ | | | | |

Table 22

| Point F | | | | | |
|---|---|---|---|---|---|
| a=HFO-1132a | 0.0 | 2.5 | 5.0 | 7.5 | 10.0 |
| x=E-HFO-1132 | 20.7 | 18.0 | 15.2 | 12.4 | 9.7 |
| y=R32 | 0.0 | 0.0 | 0.0 | 0.0 | 0.0 |
| z=Propane | 79.3 | 79.5 | 79.8 | 80.1 | 80.3 |
| Approximate expression for x based on a | -1.104a+20.72 | | | | |
| Approximate expression for y based on a | 0.0 | | | | |
| Approximate expression for z based on a | 0.104a+79.28 | | | | |

The above results show that in the refrigerant according to the present disclosure, the disproportionation reaction does not occur at 3 MPa and 150°C, and the refrigerant has a refrigerating capacity (Cap) ratio of 200% or more relative to R1234yf and a GWP of 150 or less in the following case:
when the mass% of HFO-1132(E), R32, propane, and HFO-1132a based on their sum is respectively represented by x, y, z, and a (with the proviso that $0 < a \leq 10.0$), coordinates (x,y,z) in a ternary composition diagram in which the sum of HFO-1132(E), R32, and propane is (100 - a) mass% are within the range of a figure surrounded by straight lines ID, DF, FE, EH, and HI that connect the following 5 points:

point I (-a+66.7, 22.1, 11.2),
point D (-a+75.0, 0.0, 25.0),
point F (-1.104a+20.72, 0.0, 0.104a+79.28),
point E (0.0, $0.0011a^2$-0.6234a+11.514, $-0.0011a^2$-0.3766a+88.486), and
point H (0.0, 21.9, -a+78.1)
or on the above straight lines ID, DF, FE, and HI (excluding the points E and H).

A similar test was conducted relative to R404A instead.

Table 23

| Item | Unit | Comp. Ex. 3 | Comp. Ex. 1-14 | Comp. Ex. 1-15 | Comp. Ex. 1-16 | Comp. Ex. 1-17 | Comp. Ex. 1-18 | Comp. Ex. 1-19 | Comp. Ex. 1-20 |
|---|---|---|---|---|---|---|---|---|---|
| | | | C | D | G | H | I | L | M |
| E-HFO-1132 | Mass% | R404A | 60.0 | 75.0 | 77.9 | 0.0 | 66.7 | 0.0 | 11.6 |
| R32 | Mass% | | 40.0 | 0.0 | 22.1 | 21.9 | 22.1 | 6.6 | 0.0 |
| Propane | Mass% | | 0.0 | 25.0 | 0.0 | 78.1 | 11.2 | 93.4 | 88.4 |
| HFO-1132a | Mass% | | 0.0 | 0.0 | 0.0 | 0.0 | 0.0 | 0.0 | 0.0 |
| GWP | - | 3922 | 271 | 2 | 150 | 150 | 150 | 47 | 3 |
| COP ratio | % (relative to R404A) | 100.0 | 103 | 102 | 103 | 104 | 101 | 106 | 106 |
| Refrigerating capacity ratio | % (relative to R404A) | 100.0 | 171 | 157 | 165 | 128 | 173 | 100 | 100 |

Table 24

| Item | Unit | Comp. Ex. 3 | Comp. Ex. 2-9 | Ex. 2-6 | Comp. Ex. 2-10 | Comp. Ex. 2-11 | Ex. 2-7 | Comp. Ex. 2-12 | Ex. 2-8 |
|---|---|---|---|---|---|---|---|---|---|
| | | | C | D | G | H | I | L | M |
| E-HFO-1132 | Mass% | R404A | 57.5 | 72.5 | 75.4 | 0.0 | 64.2 | 0.0 | 8.1 |
| R32 | Mass% | | 40.0 | 0.0 | 22.1 | 21.9 | 22.1 | 5.1 | 0.0 |
| Propane | Mass% | | 0.0 | 25.0 | 0.0 | 75.6 | 11.2 | 92.4 | 89.4 |
| HFO-1132a | Mass% | | 2.5 | 2.5 | 2.5 | 2.5 | 2.5 | 2.5 | 2.5 |
| GWP | - | 3922 | 271 | 2 | 150 | 150 | 150 | 37 | 3 |
| COP ratio | % (relative to R404A) | 100.0 | 103 | 102 | 102 | 104 | 101 | 106 | 106 |
| Refrigerating capacity ratio | % (relative to R404A) | 100.0 | 174 | 159 | 169 | 131 | 177 | 100 | 100 |
| [0109] Table 25 | | | | | | | | | |

| Item | Unit | Comp. Ex. 3 | Comp. Ex. 3-9 | Ex. 3-6 | Comp. Ex. 3-10 | Comp. Ex. 3-11 | Ex.3-7 | Comp. Ex. 3-12 | Ex. 3-8 |
|---|---|---|---|---|---|---|---|---|---|
| | | | C | D | G | H | I | L | M |
| E-HFO-1132 | Mass% | R404A | 55.0 | 70.0 | 72.9 | 0.0 | 61.7 | 0.0 | 6.3 |
| R32 | Mass% | | 40.0 | 0.0 | 22.1 | 21.9 | 22.1 | 3.6 | 0.0 |
| Propane | Mass% | | 0.0 | 25.0 | 0.0 | 73.1 | 11.2 | 91.4 | 88.7 |
| HFO-1132a | Mass% | | 5.0 | 5.0 | 5.0 | 5.0 | 5.0 | 5.0 | 5.0 |
| GWP | - | 3922 | 271 | 2 | 150 | 150 | 150 | 27 | 3 |
| COP ratio | % (relative to R404A) | 100.0 | 102 | 102 | 102 | 104 | 101 | 106 | 106 |
| Refrigerating capacity ratio | % (relative to R404A) | 100.0 | 178 | 161 | 173 | 134 | 180 | 100 | 100 |

Table 26

| Item | Unit | Comp. Ex. 3 | Comp. Ex. 4-9 | Ex. 4-6 | Comp. Ex. 4-10 | Comp. Ex. 4-11 | Ex.4-7 | Comp. Ex. 4-12 | Ex. 4-8 |
|---|---|---|---|---|---|---|---|---|---|
| | | | C | D | G | H | I | L | M |
| E-HFO-1132 | Mass% | R404A | 52.5 | 67.5 | 70.4 | 0.0 | 59.2 | 0.0 | 3.8 |
| R32 | Mass% | | 40.0 | 0.0 | 22.1 | 21.9 | 22.1 | 2.2 | 0.0 |
| Propane | Mass% | | 0.0 | 25.0 | 0.0 | 70.6 | 11.2 | 90.3 | 88.7 |
| HFO-1132a | Mass% | | 7.5 | 7.5 | 7.5 | 7.5 | 7.5 | 7.5 | 7.5 |
| GWP | - | 3922 | 271 | 2 | 150 | 150 | 150 | 18 | 3 |
| COP ratio | % (relative to R404A) | 100.0 | 102 | 101 | 102 | 104 | 101 | 106 | 106 |

(continued)

| Item | Unit | Comp. Ex. 3 | Comp. Ex. 4-9 | Ex. 4-6 | Comp. Ex. 4-10 | Comp. Ex. 4-11 | Ex.4-7 | Comp. Ex. 4-12 | Ex. 4-8 |
|---|---|---|---|---|---|---|---|---|---|
| | | | C | D | G | H | I | L | M |
| Refrigerating capacity ratio | % (relative to R404A) | 100.0 | 182 | 164 | 177 | 138 | 183 | 100 | 100 |

Table 27

| Item | Unit | Comp. Ex. 3 | Comp. Ex. 5-9 | Ex. 5-6 | Comp. Ex. 5-10 | Comp. Ex. 5-11 | Ex.5-7 | Comp. Ex. 5-12 | Ex. 5-8 |
|---|---|---|---|---|---|---|---|---|---|
| | | | C | D | G | H | I | L | M |
| E-HFO-1132 | Mass% | R404A | 50.0 | 65.0 | 67.9 | 0.0 | 56.7 | 0.0 | 1.2 |
| R32 | Mass% | | 40.0 | 0.0 | 22.1 | 21.9 | 22.1 | 0.7 | 0.0 |
| Propane | Mass% | | 0.0 | 25.0 | 0.0 | 68.1 | 11.2 | 89.3 | 88.8 |
| HFO-1132a | Mass% | | 10.0 | 10.0 | 10.0 | 10.0 | 10.0 | 10.0 | 10.0 |
| GWP | - | 3922 | 271 | 2 | 150 | 150 | 150 | 8 | 3 |
| COP ratio | % (relative to R404A) | 100.0 | 101 | 101 | 101 | 104 | 100 | 106 | 106 |
| Refrigerating capacity ratio | % (relative to R404A) | 100.0 | 186 | 166 | 181 | 141 | 187 | 100 | 100 |

The coordinates of each point were calculated based on the least squares method as follows.

Table 28

| Point L | | | | | |
|---|---|---|---|---|---|
| a=HFO-1132a | 0.0 | 2.5 | 5.0 | 7.5 | 10.0 |
| x=E-HFO-1132 | 0.0 | 0.0 | 0.0 | 0.0 | 0.0 |
| y=R32 | 6.6 | 5.1 | 3.6 | 2.2 | 0.7 |
| z=Propane | 93.4 | 92.4 | 91.4 | 90.3 | 89.3 |
| Approximate expression for x based on a | 0.0 | | | | |
| Approximate expression for y based on a | $0.0011a^2-0.5994a+6.5943$ | | | | |
| Approximate expression for z based on a | $-0.0011a^2-0.4006a+93.406$ | | | | |

Table 29

| Point M | | | | | | |
|---|---|---|---|---|---|---|
| a=HFO-1132a | 0.0 | 2.5 | 5.0 | 5.0 | 7.5 | 10.0 |
| x=E-HFO-1132 | 11.6 | 8.1 | 6.3 | 6.3 | 3.8 | 1.2 |
| y=R32 | 0.0 | 0.0 | 0.0 | 0.0 | 0.0 | 0.0 |
| z=Propane | 88.4 | 89.4 | 88.7 | 88.7 | 88.7 | 88.8 |
| Approximate expression for x based on a | $0.136a^2-1.74a+11.6$ | | | $-0.008a^2-0.9a+11.0$ | | |
| Approximate expression for y based on a | 0.0 | | | 0.0 | | |

(continued)

| Point M | | |
|---|---|---|
| Approximate expression for z based on a | $-0.136a^2+0.74a+88.4$ | $0.008a^2-0.1a+89.0$ |

The above results show that in the refrigerant according to the present disclosure, the disproportionation reaction does not occur at 3 MPa and 150°C, and the refrigerant has a refrigerating capacity (Cap) ratio of 100% or more relative to R404A and a GWP of 150 or less in the following case:

when the mass% of HFO-1132(E), R32, propane, and HFO-1132a based on their sum is respectively represented by x, y, z, and a (with the proviso that $0 < a \leq 10.0$),
coordinates (x,y,z) in a ternary composition diagram in which the sum of HFO-1132(E), R32, and propane is (100 - a) mass% are within the range of a figure surrounded by straight lines ID, DM, ML, LH, and HI that connect the following 5 points when $0 < a \leq 5.0$:

point I ($-a+66.7$, 22.1, 11.2),
point D ($-a+75.0$, 0.0, 25.0),
point M ($0.136a^2-1.74a+11.6$, 0.0, $-0.136a^2+0.74a+88.4$),
point L (0.0, $0.0011a^2-0.5994a+6.5943$, $-0.0011a^2-0.4006a+93.406$), and
point H (0.0, 21.9, $-a+78.1$); and
the following 5 points when $5.0 < a \leq 10.0$,
point I ($-a+66.7$, 22.1, 11.2),
point D ($-a+75.0$, 0.0, 25.0),
point M ($-0.008a^2-0.9a+11.0$, 0.0, $0.008a^2-0.1a+89.0$),
point L (0.0, $0.0011a^2-0.5994a+6.5943$, $-0.0011a^2-0.4006a+93.406$), and
point H (0.0, 21.9, $-a+78.1$)
or on the above straight lines ID, DM, ML, and HI (excluding the points L and H).

Other Examples and Comparative Examples are shown below.

Table 30

| Item | Unit | Comp. Ex. 1 | Comp. Ex. 2-13 | Ex. 2-10 | Ex. 2-11 | Ex. 2-12 | Comp. Ex.2-14 | Ex. 2-13 | Ex. 2-14 | Ex. 2-15 | Ex. 2-16 | Ex. 2-17 |
|---|---|---|---|---|---|---|---|---|---|---|---|---|
| E-HFO-1132 | Mass% | R410A | 5.0 | 5.0 | 5.0 | 5.0 | 5.0 | 25.0 | 25.0 | 12.5 | 0.0 | 25.0 |
| HFO-1123 | Mass% | | 0.0 | 0.0 | 0.0 | 0.0 | 0.0 | 0.0 | 0.0 | 12.5 | 25.0 | 0.0 |
| R32 | Mass% | | 0.0 | 15.0 | 25.0 | 40.0 | 50.0 | 0.0 | 15.0 | 15.0 | 15.0 | 25.0 |
| Propane | Mass% | | 92.5 | 77.5 | 67.5 | 52.5 | 42.5 | 72.5 | 57.5 | 57.5 | 57.5 | 47.5 |
| HFO-1132a | Mass% | | 2.5 | 2.5 | 2.5 | 2.5 | 2.5 | 2.5 | 2.5 | 2.5 | 2.5 | 2.5 |
| GWP | - | 2088 | 3 | 104 | 171 | 272 | 339 | 2 | 103 | 103 | 103 | 170 |
| COP ratio | % (relative to R410A) | 100 | 105 | 102 | 101 | 96 | 94 | 103 | 100 | 100 | 99 | 97 |
| Refrigerating capacity ratio | % (relative to R410A) | 100 | 63 | 80 | 89 | 99 | 106 | 75 | 89 | 89 | 89 | 97 |

| Item | Unit | Ex.2-18 | Comp. Ex. 2-15 | Ex. 2-19 | Ex. 2-20 | Ex. 2-21 | Ex. 2-22 | Comp. Ex. 2-16 | Ex. 2-23 | Ex. 2-24 | Comp. Ex. 2-17 | Comp. Ex. 2-18 |
|---|---|---|---|---|---|---|---|---|---|---|---|---|
| E-HFO-1132 | Mass% | 25.0 | 25.0 | 45.0 | 45.0 | 45.0 | 45.0 | 45.0 | 70.0 | 70.0 | 70.0 | 70.0 |
| HFO-1123 | Mass% | 0.0 | 0.0 | 0.0 | 0.0 | 0.0 | 0.0 | 0.0 | 0.0 | 0.0 | 0.0 | 0.0 |
| R32 | Mass% | 40.0 | 50.0 | 0.0 | 15.0 | 25.0 | 40.0 | 50.0 | 0.0 | 5.0 | 15.0 | 25.0 |
| Propane | Mass% | 22.5 | 22.5 | 52.5 | 37.5 | 27.5 | 12.5 | 2.5 | 27.5 | 22.5 | 12.5 | 2.5 |
| HFO-1132a | Mass% | 2.5 | 2.5 | 2.5 | 2.5 | 2.5 | 2.5 | 2.5 | 2.5 | 2.5 | 2.5 | 2.5 |
| GWP | - | 271 | 338 | 2 | 103 | 170 | 271 | 338 | 2 | 35 | 102 | 170 |
| COP ratio | % (relative to R410A) | 96 | 96 | 101 | 97 | 96 | 97 | 100 | 98 | 98 | 98 | 99 |
| Refrigerating capacity ratio | % (relative to R410A) | 113 | 114 | 85 | 98 | 106 | 113 | 114 | 96 | 100 | 106 | 109 |
| Disproportionation reaction (3 Mpa) | | | | | | | | | Non-explosion | Non-explosion | Explosion | Explosion |

Table 31

| Item | Unit | Comp. Ex. 1 | Comp. Ex. 3-13 | Ex. 3-10 | Ex. 3-11 | Ex. 3-12 | Ex. 3-13 | Ex. 3-14 | Ex. 3-15 | Ex. 3-16 | Ex. 3-17 | Comp. Ex. 3-14 |
|---|---|---|---|---|---|---|---|---|---|---|---|---|
| E-HFO-1132 | Mass% | R410A | 5.0 | 5.0 | 5.0 | 25.0 | 25.0 | 12.5 | 0.0 | 25.0 | 25.0 | 25.0 |
| HFO-1123 | Mass% | | 0.0 | 0.0 | 0.0 | 0.0 | 0.0 | 12.5 | 25.0 | 0.0 | 0.0 | 0.0 |
| R32 | Mass% | | 0.0 | 15.0 | 25.0 | 0.0 | 15.0 | 15.0 | 15.0 | 25.0 | 40.0 | 50.0 |
| Propane | Mass% | | 90.0 | 75.0 | 65.0 | 70.0 | 55.0 | 55.0 | 55.0 | 45.0 | 22.5 | 22.5 |
| HFO-1132a | Mass% | | 5.0 | 5.0 | 5.0 | 5.0 | 5.0 | 5.0 | 5.0 | 5.0 | 5.0 | 5.0 |
| GWP | - | 2088 | 3 | 104 | 171 | 2 | 103 | 103 | 103 | 170 | 271 | 338 |
| COP ratio | % (relative to R410A) | 100 | 105 | 102 | 100 | 103 | 99 | 99 | 99 | 96 | 95 | 95 |
| Refrigerating capacity ratio | % (relative to R410A) | 100 | 64 | 81 | 90 | 76 | 91 | 91 | 91 | 99 | 114 | 115 |

| Item | Unit | Ex.3-18 | Ex.3-19 | Ex.3-20 | Ex.3-21 | Comp. Ex. 2-15 | Ex.3-22 | Comp. Ex. 3-16 | Comp. Ex. 3-17 |
|---|---|---|---|---|---|---|---|---|---|
| E-HFO-1132 | Mass% | 45.0 | 45.0 | 45.0 | 45.0 | 45.0 | 70.0 | 70.0 | 70.0 |
| HFO-1123 | Mass% | 0.0 | 0.0 | 0.0 | 0.0 | 0.0 | 0.0 | 0.0 | 0.0 |
| R32 | Mass% | 0.0 | 15.0 | 25.0 | 40.0 | 47.5 | 0.0 | 5.0 | 15.0 |
| Propane | Mass% | 50.0 | 35.0 | 25.0 | 10.0 | 2.5 | 25.0 | 20.0 | 10.0 |
| HFO-1132a | Mass% | 5.0 | 5.0 | 5.0 | 5.0 | 5.0 | 5.0 | 5.0 | 5.0 |
| GWP | - | 2 | 103 | 170 | 271 | 321 | 2 | 35 | 102 |
| COP ratio | % (relative to R410A) | 100 | 97 | 96 | 97 | 99 | 98 | 98 | 98 |
| Refrigerating capacity ratio | % (relative to R410A) | 86 | 100 | 108 | 114 | 115 | 98 | 102 | 107 |
| Disproportionation reaction (3 Mpa) | | | | | | | Non-explosion | Explosion | Explosion |

Table 32

| Item | Unit | Comp. Ex. 1 | Comp. Ex. 4-13 | Ex. 4-10 | Ex. 4-11 | Ex. 4-12 | Comp. Ex. 4-14 | Ex.4-13 | Ex.4-14 | Ex.4-15 | Ex.4-16 | Ex.4-17 | Ex.4-18 |
|---|---|---|---|---|---|---|---|---|---|---|---|---|---|
| E-HFO-1132 | Mass% | R410A | 5.0 | 5.0 | 5.0 | 5.0 | 5.0 | 25.0 | 25.0 | 12.5 | 0.0 | 25.0 | 25.0 |
| HFO-1123 | Mass% | | 0.0 | 0.0 | 0.0 | 0.0 | 0.0 | 0.0 | 0.0 | 12.5 | 25.0 | 0.0 | 0.0 |
| R32 | Mass% | | 0.0 | 15.0 | 25.0 | 40.0 | 50.0 | 0.0 | 15.0 | 15.0 | 15.0 | 25.0 | 40.0 |
| Propane | Mass% | | 87.5 | 72.5 | 62.5 | 47.5 | 37.5 | 67.5 | 52.5 | 52.5 | 52.5 | 42.5 | 22.5 |
| HFO-1132a | Mass% | | 7.5 | 7.5 | 7.5 | 7.5 | 7.5 | 7.5 | 7.5 | 7.5 | 7.5 | 7.5 | 7.5 |
| GWP | - | 2088 | 3 | 104 | 171 | 272 | 339 | 2 | 103 | 103 | 103 | 170 | 271 |
| COP ratio | % (relative to R410A) | 100 | 105 | 102 | 100 | 95 | 93 | 103 | 99 | 98 | 98 | 96 | 95 |
| Refrigerating capacity ratio | % (relative to R410A) | 100 | 66 | 83 | 92 | 102 | 110 | 78 | 93 | 93 | 92 | 101 | 114 |

| Item | Unit | Ex.4-18 | Comp. Ex. 4-15 | Ex.4-19 | Ex.4-20 | Ex.4-21 | Ex.4-22 | Comp. Ex.4-16 | Comp. Ex. 4-17 | Comp. Ex. 4-18 |
|---|---|---|---|---|---|---|---|---|---|---|
| E-HFO-1132 | Mass% | 25.0 | 25.0 | 45.0 | 45.0 | 45.0 | 45.0 | 45.0 | 70.0 | 70.0 |
| HFO-1123 | Mass% | 0.0 | 0.0 | 0.0 | 0.0 | 0.0 | 0.0 | 0.0 | 0.0 | 0.0 |
| R32 | Mass% | 40.0 | 50.0 | 0.0 | 15.0 | 25.0 | 40.0 | 46.0 | 5.0 | 15.0 |
| Propane | Mass% | 22.5 | 22.5 | 47.5 | 32.5 | 22.5 | 7.5 | 1.5 | 17.5 | 7.5 |
| HFO-1132a | Mass% | 7.5 | 7.5 | 7.5 | 7.5 | 7.5 | 7.5 | 7.5 | 7.5 | 7.5 |
| GWP | - | 271 | 339 | 2 | 103 | 170 | 271 | 311 | 35 | 102 |
| COP ratio | % (relative to R410A) | 95 | 95 | 100 | 96 | 96 | 97 | 99 | 97 | 98 |
| Refrigerating capacity ratio | % (relative to R410A) | 114 | 116 | 88 | 102 | 109 | 116 | 116 | 103 | 109 |
| Disproportionation reaction (3 Mpa) | - | - | - | - | - | - | - | - | Explosion | Explosion |

Table 33

| Item | Unit | Comp. Ex. 1 | Comp. Ex. 5-13 | Ex. 5-10 | Ex. 5-11 | Ex. 5-12 | Comp. Ex. 5-14 | Ex.5-13 | Ex.5-14 | Ex.5-15 | Ex.5-16 | Ex.5-17 | Ex.5-18 |
|---|---|---|---|---|---|---|---|---|---|---|---|---|---|
| E-HFO-1132 | Mass% | | 5.0 | 5.0 | 5.0 | 50 | 5.0 | 25.0 | 25.0 | 12.5 | 0.0 | 25.0 | 25.0 |
| HFO-1123 | Mass% | | 0.0 | 0.0 | 00 | 0.0 | 0.0 | 0.0 | 0.0 | 12.5 | 25.0 | 0.0 | 0.0 |
| R32 | Mass% | R410A | 0.0 | 15.0 | 25.0 | 40.0 | 50.0 | 0.0 | 15.0 | 15.0 | 15.0 | 25.0 | 40.0 |
| Propane | Mass% | | 85.0 | 70.0 | 60.0 | 45.0 | 35.0 | 65.0 | 50.0 | 50.0 | 50.0 | 40.0 | 22.5 |
| HFO-1132a | Mass% | | 10.0 | 10.0 | 10.0 | 10.0 | 10.0 | 10.0 | 10.0 | 10.0 | 10.0 | 10.0 | 10.0 |
| GWP | - | 2088 | 3 | 104 | 171 | 272 | 339 | 2 | 103 | 103 | 103 | 170 | 271 |
| COP ratio | % (relative to R410A) | 100 | 104 | 102 | 99 | 94 | 93 | 102 | 98 | 98 | 97 | 95 | 95 |
| Refrigerating capacity ratio | % (relative to R410A) | 100 | 68 | 84 | 93 | 104 | 112 | 79 | 94 | 94 | 94 | 102 | 115 |

| Item | Unit | Ex.5-18 | Comp. Ex. 5-15 | Ex.5-19 | Ex.5-20 | Ex.5-21 | Ex.5-22 | Comp. Ex.5-16 | Ex. 5-23 | Comp. Ex. 5-17 |
|---|---|---|---|---|---|---|---|---|---|---|
| E-HFO-1132 | Mass% | 25.0 | 25.0 | 40.0 | 40.0 | 40.0 | 40.0 | 40.0 | 60.0 | 60.0 |
| HFO-1123 | Mass% | 0.0 | 0.0 | 0.0 | 0.0 | 0.0 | 0.0 | 0.0 | 0.0 | 0.0 |
| R32 | Mass% | 40.0 | 50,0 | 0.0 | 15.0 | 25.0 | 40.0 | 47.0 | 5.0 | 20.0 |
| Propane | Mass% | 22.5 | 22.5 | 50.0 | 35.0 | 25.0 | 10.0 | 3.0 | 25.0 | 10.0 |
| HFO-1132a | Mass% | 10.0 | 10.0 | 10.0 | 10.0 | 10.0 | 10.0 | 10.0 | 10.0 | 10.0 |
| GWP | | 271 | 339 | 2 | 103 | 170 | 271 | 318 | 35 | 136 |
| COP ratio | % (relative to R410A) | 95 | 94 | 100 | 96 | 95 | 96 | 98 | 97 | 97 |
| Refrigerating capacity ratio | % (relative to R410A) | 115 | 117 | 87 | 101 | 110 | 117 | 119 | 102 | 112 |
| Disproportionation reaction (3 Mpa) | - | - | - | - | - | - | - | - | Non-explosion | Explosion |

Table 34

| Item | Unit | Comp. Ex. 2 | Comp. Ex. 2-19 | Ex. 2-25 | Comp. Ex. 2-20 | Ex.2-26 | Ex.2-27 | Ex.2-28 |
|---|---|---|---|---|---|---|---|---|
| E-HFO-1132 | Mass% | R1234yf | 10.0 | 10.0 | 10.0 | 25.0 | 25.0 | 12.5 |
| HFO-1123 | Mass% | | 0.0 | 0.0 | 0.0 | 0.0 | 0.0 | 12.5 |
| R32 | Mass% | | 0.0 | 15.0 | 25.0 | 0.0 | 15.0 | 15.0 |
| Propane | Mass% | | 87.5 | 72.5 | 62.5 | 72.5 | 57.5 | 57.5 |
| HFO-1132a | Mass% | | 2.5 | 2.5 | 2.5 | 2.5 | 2.5 | 2.5 |
| GWP | - | 4 | 3 | 104 | 171 | 2 | 103 | 103 |
| COP ratio | % (relative to R1234yf) | 100 | 103 | 101 | 100 | 102 | 100 | 100 |
| Refrigerating capacity ratio | % (relative to R1234yf) | 100 | 186 | 236 | 269 | 213 | 263 | 263 |
| Item | Unit | Ex.2-29 | Comp. Ex. 2-21 | Ex.2-30 | Ex.2-31 | Comp. Ex.2-22 | Ex.2-32 | Comp. Ex.2-23 |
| E-HFO-1132 | Mass% | 0.0 | 25.0 | 45.0 | 45.0 | 45.0 | 70.0 | 70.0 |
| HFO-1123 | Mass% | 25.0 | 0.0 | 0.0 | 0.0 | 0.0 | 0.0 | 0.0 |
| R32 | Mass% | 15.0 | 25.0 | 0.0 | 15.0 | 25.0 | 0.0 | 15.0 |
| Propane | Mass% | 57.5 | 47.5 | 52.5 | 37.5 | 27.5 | 27.5 | 12.5 |
| HFO-1132a | Mass% | 2.5 | 2.5 | 2.5 | 2.5 | 2.5 | 2.5 | 2.5 |
| GWP | - | 103 | 170 | 2 | 103 | 170 | 2 | 102 |
| COP ratio | % (relative to R1234yf) | 100 | 98 | 100 | 98 | 98 | 99 | 98 |
| Refrigerating capacity ratio | % (relative to R1234yf) | 262 | 291 | 247 | 294 | 322 | 285 | 312 |
| Disproportionation reaction (3 Mpa) | - | - | - | - | - | - | Non-explosion | Explosion |

Table 35

| Item | Unit | Comp. Ex. 2 | Comp. Ex. 3-18 | Ex. 3-23 | Comp. Ex. 3-19 | Ex.3-24 | Ex.3-25 | Ex.3-26 |
|---|---|---|---|---|---|---|---|---|
| E-HFO-1132 | Mass% | R1234yf | 5.0 | 5.0 | 5.0 | 25.0 | 25.0 | 12.5 |
| HFO-1123 | Mass% | | 0.0 | 0.0 | 0.0 | 0.0 | 0.0 | 12.5 |
| R32 | Mass% | | 0.0 | 15.0 | 25.0 | 0.0 | 15.0 | 15.0 |
| Propane | Mass% | | 90.0 | 75.0 | 65.0 | 70.0 | 55.0 | 55.0 |
| HFO-1132a | Mass% | | 5.0 | 5.0 | 5.0 | 5.0 | 5.0 | 5.0 |
| GWP | - | 4 | 3 | 104 | 171 | 2 | 103 | 103 |
| COP ratio | % (relative to R1234yf) | 100 | 103 | 101 | 101 | 102 | 100 | 100 |

(continued)

| Item | Unit | Comp. Ex. 2 | Comp. Ex. 3-18 | Ex. 3-23 | Comp. Ex. 3-19 | Ex.3-24 | Ex.3-25 | Ex.3-26 |
|---|---|---|---|---|---|---|---|---|
| Refrigerating capacity ratio | % (relative to R1234yf) | 100 | 182 | 232 | 266 | 218 | 269 | 269 |
| Item | Unit | Ex.3-27 | Comp. Ex. 3-20 | Ex.3-28 | Ex.3-29 | Comp. Ex.3-21 | Ex.3-30 | Comp. Ex.3-22 |
| E-HFO-1132 | Mass% | 0.0 | 25.0 | 45.0 | 45.0 | 45.0 | 65.0 | 65.0 |
| HFO-1123 | Mass% | 25.0 | 0.0 | 0.0 | 0.0 | 0.0 | 0.0 | 0.0 |
| R32 | Mass% | 15.0 | 25.0 | 0.0 | 15.0 | 25.0 | 0.0 | 20.0 |
| Propane | Mass% | 55.0 | 45.0 | 50.0 | 35.0 | 25.0 | 30.0 | 10.0 |
| HFO-1132a | Mass% | 5.0 | 5.0 | 5.0 | 5.0 | 5.0 | 5.0 | 5.0 |
| GWP | - | 103 | 170 | 2 | 103 | 170 | 2 | 136 |
| COP ratio | % (relative to R1234yf) | 99 | 98 | 100 | 98 | 98 | 99 | 98 |
| Refrigerating capacity ratio | % (relative to R1234yf) | 268 | 298 | 253 | 301 | 328 | 286 | 322 |
| Disproportionation reaction (3 Mpa) | - | - | - | - | - | - | Non-explosion | Explosion |

Table 36

| Item | Unit | Comp. Ex. 2 | Comp. Ex. 4-19 | Ex. 4-23 | Comp. Ex. 3-20 | Ex.4-24 | Ex.4-25 | Ex.4-26 |
|---|---|---|---|---|---|---|---|---|
| E-HFO-1132 | Mass% | R1234yf | 5.0 | 5.0 | 5.0 | 25.0 | 25.0 | 12.5 |
| HFO-1123 | Mass% | | 0.0 | 0.0 | 0.0 | 0.0 | 0.0 | 12.5 |
| R32 | Mass% | | 0.0 | 15.0 | 25.0 | 0.0 | 15.0 | 15.0 |
| Propane | Mass% | | 87.5 | 72.5 | 62.5 | 67.5 | 52.5 | 52.5 |
| HFO-1132a | Mass% | | 7.5 | 7.5 | 7.5 | 7.5 | 7.5 | 7.5 |
| GWP | - | 4 | 3 | 104 | 171 | 2 | 103 | 103 |
| COP ratio | % (relative to R1234yf) | 100 | 103 | 101 | 100 | 102 | 99 | 99 |
| Refrigerating capacity ratio | % (relative to R1234yf) | 100 | 186 | 238 | 272 | 224 | 275 | 276 |
| Item | Unit | Ex.4-27 | Comp. Ex. 4-21 | Ex.4-28 | Ex.4-29 | Comp. Ex.4-22 | Ex.4-30 | Comp. Ex.4-23 |
| E-HFO-1132 | Mass% | 0.0 | 25.0 | 45.0 | 45.0 | 45.0 | 65.0 | 65.0 |
| HFO-1123 | Mass% | 25.0 | 0.0 | 0.0 | 0.0 | 0.0 | 0.0 | 0.0 |
| R32 | Mass% | 15.0 | 25.0 | 0.0 | 15.0 | 25.0 | 0.0 | 15.0 |
| Propane | Mass% | 52.5 | 42.5 | 47.5 | 32.5 | 22.5 | 27.5 | 12.5 |
| HFO-1132a | Mass% | 7.5 | 7.5 | 7.5 | 7.5 | 7.5 | 7.5 | 7.5 |
| GWP | - | 103 | 170 | 2 | 103 | 170 | 2 | 102 |

(continued)

| Item | Unit | Ex.4-27 | Comp. Ex. 4-21 | Ex.4-28 | Ex.4-29 | Comp. Ex.4-22 | Ex.4-30 | Comp. Ex.4-23 |
|---|---|---|---|---|---|---|---|---|
| COP ratio | % (relative to R1234yf) | 99 | 97 | 100 | 98 | 97 | 99 | 98 |
| Refrigerating capacity ratio | % (relative to R1234yf) | 275 | 304 | 259 | 308 | 334 | 292 | 323 |
| Disproportionation reaction (3 Mpa) | - | - | - | - | - | - | Non-explosion | Explosion |

Table 37

| Item | Unit | Comp. Ex. 2 | Comp. Ex. 5-18 | Ex. 5-24 | Comp. Ex. 5-19 | Ex.5-25 | Ex.5-26 | Ex.5-27 |
|---|---|---|---|---|---|---|---|---|
| E-HFO-1132 | Mass% | R1234yf | 5.0 | 5.0 | 5.0 | 25.0 | 25.0 | 12.5 |
| HFO-1123 | Mass% | | 0.0 | 0.0 | 0.0 | 0.0 | 0.0 | 12.5 |
| R32 | Mass% | | 0.0 | 15.0 | 25.0 | 0.0 | 15.0 | 15.0 |
| Propane | Mass% | | 85.0 | 70.0 | 60.0 | 65.0 | 50.0 | 50.0 |
| HFO-1132a | Mass% | | 10.0 | 10.0 | 10.0 | 10.0 | 10.0 | 10.0 |
| GWP | - | 4 | 3 | 104 | 171 | 2 | 103 | 103 |
| COP ratio | % (relative to R1234yf) | 100 | 102 | 101 | 100 | 101 | 99 | 99 |
| Refrigerating capacity ratio | % (relative to R1234yf) | 100 | 191 | 244 | 278 | 230 | 281 | 282 |
| Item | Unit | Ex.5-28 | Comp. Ex. 5-20 | Ex.5-29 | Ex.5-30 | Comp. Ex.5-21 | Ex.5-31 | Comp. Ex.5-22 |
| E-HFO-1132 | Mass% | 0.0 | 25.0 | 45.0 | 45.0 | 45.0 | 60.0 | 60.0 |
| HFO-1123 | Mass% | 25.0 | 0.0 | 0.0 | 0.0 | 0.0 | 0.0 | 0.0 |
| R32 | Mass% | 15.0 | 25.0 | 0.0 | 15.0 | 25.0 | 0.0 | 17.5 |
| Propane | Mass% | 50.0 | 40.0 | 45.0 | 30.0 | 20.0 | 30.0 | 12.5 |
| HFO-1132a | Mass% | 10.0 | 10.0 | 10.0 | 10.0 | 10.0 | 10.0 | 10.0 |
| GWP | - | 103 | 170 | 2 | 103 | 170 | 2 | 119 |
| COP ratio | % (relative to R1234yf) | 98 | 97 | 99 | 97 | 97 | 98 | 98 |
| Refrigerating capacity ratio | % (relative to R1234yf) | 282 | 311 | 266 | 316 | 340 | 292 | 332 |
| Disproportionation reaction (3 Mpa) | - | - | - | - | - | - | Non-explosion | Explosion |

Table 38

| Item | Unit | Comp. Ex. 3 | Comp. Ex. 2-24 | Ex. 2-33 | Comp. Ex. 2-25 | Ex.2-34 | Ex.2-35 | Ex.2-36 |
|---|---|---|---|---|---|---|---|---|
| E-HFO-1132 | Mass% | R404A | 5.0 | 5.0 | 5.0 | 25.0 | 25.0 | 12.5 |
| HFO-1123 | Mass% | | 0.0 | 0.0 | 0.0 | 0.0 | 0.0 | 12.5 |
| R32 | Mass% | | 0.0 | 15.0 | 25.0 | 0.0 | 15.0 | 15.0 |
| Propane | Mass% | | 92.5 | 77.5 | 67.5 | 72.5 | 57.5 | 57.5 |
| HFO-1132a | Mass% | | 2.5 | 2.5 | 2.5 | 2.5 | 2.5 | 2.5 |
| GWP | - | 3922 | 3 | 104 | 171 | 2 | 103 | 103 |
| COP ratio | % (relative to R404A) | 100 | 106 | 104 | 104 | 105 | 103 | 103 |
| Refrigerating capacity ratio | % (relative to R404A) | 100 | 96 | 123 | 143 | 116 | 145 | 145 |
| Item | Unit | Ex.2-37 | Comp. Ex. 2-26 | Ex.2-38 | Ex.2-39 | Comp. Ex.2-27 | Ex.2-40 | Comp. Ex.2-28 |
| E-HFO-1132 | Mass% | 0.0 | 25.0 | 45.0 | 45.0 | 45.0 | 70.0 | 70.0 |
| HFO-1123 | Mass% | 25.0 | 0.0 | 0.0 | 0.0 | 0.0 | 0.0 | 0.0 |
| R32 | Mass% | 15.0 | 25.0 | 0.0 | 15.0 | 25.0 | 0.0 | 15.0 |
| Propane | Mass% | 57.5 | 47.5 | 52.5 | 37.5 | 27.5 | 27.5 | 12.5 |
| HFO-1132a | Mass% | 2.5 | 2.5 | 2.5 | 2.5 | 2.5 | 2.5 | 2.5 |
| GWP | - | 103 | 170 | 2 | 103 | 170 | 2 | 102 |
| COP ratio | % (relative to R404A) | 103 | 101 | 103 | 101 | 101 | 102 | 101 |
| Refrigerating capacity ratio | % (relative to R404A) | 144 | 162 | 136 | 163 | 180 | 158 | 173 |
| Disproportionation reaction (3 Mpa) | - | - | - | - | - | - | Non-explosion | Explosion |

Table 39

| Item | Unit | Comp. Ex. 3 | Comp. Ex. 3-23 | Ex. 3-31 | Comp. Ex. 3-24 | Ex.3-32 | Ex.3-33 | Ex.3-34 |
|---|---|---|---|---|---|---|---|---|
| E-HFO-1132 | Mass% | R404A | 5.0 | 5.0 | 5.0 | 25.0 | 25.0 | 12.5 |
| HFO-1123 | Mass% | | 0.0 | 0.0 | 0.0 | 0.0 | 0.0 | 12.5 |
| R32 | Mass% | | 0.0 | 15.0 | 25.0 | 0.0 | 15.0 | 15.0 |
| Propane | Mass% | | 90.0 | 75.0 | 65.0 | 70.0 | 55.0 | 55.0 |
| HFO-1132a | Mass% | | 5.0 | 5.0 | 5.0 | 5.0 | 5.0 | 5.0 |
| GWP | - | 3922 | 3 | 104 | 171 | 2 | 103 | 103 |
| COP ratio | % (relative to R404A) | 100 | 106 | 104 | 103 | 105 | 103 | 102 |

(continued)

| Item | Unit | Comp. Ex. 3 | Comp. Ex. 3-23 | Ex. 3-31 | Comp. Ex. 3-24 | Ex.3-32 | Ex.3-33 | Ex.3-34 |
|---|---|---|---|---|---|---|---|---|
| Refrigerating capacity ratio | % (relative to R404A) | 100 | 99 | 126 | 146 | 119 | 148 | 149 |
| Item | Unit | Ex.3-35 | Comp. Ex. 3-25 | Ex.3-36 | Ex.3-37 | Comp. Ex.3-26 | Ex.3-38 | Comp. Ex.3-27 |
| E-HFO-1132 | Mass% | 0.0 | 25.0 | 45.0 | 45.0 | 45.0 | 65.0 | 65.0 |
| HFO-1123 | Mass% | 25.0 | 0.0 | 0.0 | 0.0 | 0.0 | 0.0 | 0.0 |
| R32 | Mass% | 15.0 | 25.0 | 0.0 | 15.0 | 25.0 | 0.0 | 20.0 |
| Propane | Mass% | 55.0 | 45.0 | 50.0 | 35.0 | 25.0 | 30.0 | 10.0 |
| HFO-1132a | Mass% | 5.0 | 5.0 | 5.0 | 5.0 | 5.0 | 5.0 | 5.0 |
| GWP | - | 103 | 170 | 2 | 103 | 170 | 2 | 136 |
| COP ratio | % (relative to R404A) | 102 | 101 | 103 | 101 | 101 | 102 | 101 |
| Refrigerating capacity ratio | % (relative to R404A) | 148 | 165 | 139 | 167 | 184 | 158 | 178 |
| Disproportionation reaction (3 Mpa) | - | - | - | - | - | - | Non-explosion | Explosion |

Table 40

| Item | Unit | Comp. Ex. 3 | Ex. 4-31 | Ex. 4-32 | Comp. Ex. 4-24 | Ex.4-33 | Ex.4-34 | Ex.4-35 |
|---|---|---|---|---|---|---|---|---|
| E-HFO-1132 | Mass% | R404A | 5.0 | 5.0 | 5.0 | 25.0 | 25.0 | 12.5 |
| HFO-1123 | Mass% | | 0.0 | 0.0 | 0.0 | 0.0 | 0.0 | 12.5 |
| R32 | Mass% | | 0.0 | 15.0 | 25.0 | 0.0 | 15.0 | 15.0 |
| Propane | Mass% | | 87.5 | 72.5 | 62.5 | 67.5 | 52.5 | 52.5 |
| HFO-1132a | Mass% | | 7.5 | 7.5 | 7.5 | 7.5 | 7.5 | 7.5 |
| GWP | - | 3922 | 3 | 104 | 171 | 2 | 103 | 103 |
| COP ratio | % (relative to R404A) | 100 | 106 | 104 | 103 | 105 | 102 | 102 |
| Refrigerating capacity ratio | % (relative to R404A) | 100 | 101 | 130 | 150 | 122 | 152 | 152 |
| Item | Unit | Ex.4-36 | Comp. Ex. 4-25 | Ex.4-37 | Ex.4-38 | Comp. Ex.4-26 | Ex.4-39 | Comp. Ex.4-27 |
| E-HFO-1132 | Mass% | 0.0 | 25.0 | 45.0 | 45.0 | 45.0 | 65.0 | 65.0 |
| HFO-1123 | Mass% | 25.0 | 0.0 | 0.0 | 0.0 | 0.0 | 0.0 | 0.0 |
| R32 | Mass% | 15.0 | 25.0 | 0.0 | 15.0 | 25.0 | 0.0 | 15.0 |
| Propane | Mass% | 52.5 | 42.5 | 47.5 | 32.5 | 22.5 | 27.5 | 12.5 |
| HFO-1132a | Mass% | 7.5 | 7.5 | 7.5 | 7.5 | 7.5 | 7.5 | 7.5 |
| GWP | - | 103 | 170 | 2 | 103 | 170 | 2 | 102 |

(continued)

| Item | Unit | Ex.4-36 | Comp. Ex. 4-25 | Ex.4-37 | Ex.4-38 | Comp. Ex.4-26 | Ex.4-39 | Comp. Ex.4-27 |
|---|---|---|---|---|---|---|---|---|
| COP ratio | % (relative to R404A) | 102 | 100 | 102 | 101 | 100 | 102 | 101 |
| Refrigerating capacity ratio | % (relative to R404A) | 152 | 169 | 143 | 172 | 187 | 162 | 179 |
| Disproportionation reaction (3 Mpa) | - | - | - | - | - | - | Non-explosion | Explosion |

Table 41

| Item | Unit | Comp. Ex. 3 | Ex. 5-32 | Ex. 5-33 | Comp. Ex. 5-23 | Ex.5-34 | Ex.5-35 | Ex.5-36 |
|---|---|---|---|---|---|---|---|---|
| E-HFO-1132 | Mass% | R404A | 5.0 | 5.0 | 5.0 | 20.0 | 20.0 | 10.0 |
| HFO-1123 | Mass% | | 0.0 | 0.0 | 0.0 | 0.0 | 0.0 | 10.0 |
| R32 | Mass% | | 0.0 | 15.0 | 25.0 | 0.0 | 15.0 | 15.0 |
| Propane | Mass% | | 85.0 | 70.0 | 60.0 | 70.0 | 55.0 | 55.0 |
| HFO-1132a | Mass% | | 10.0 | 10.0 | 10.0 | 10.0 | 10.0 | 10.0 |
| GWP | - | 3922 | 3 | 104 | 171 | 2 | 103 | 103 |
| COP ratio | % (relative to R404A) | 100 | 106 | 104 | 103 | 105 | 102 | 102 |
| Refrigerating capacity ratio | % (relative to R404A) | 100 | 104 | 133 | 154 | 120 | 150 | 151 |
| Item | Unit | Ex.5-37 | Comp. Ex. 5-24 | Ex.5-38 | Ex.5-39 | Comp. Ex.5-25 | Ex.5-40 | Comp. Ex.5-26 |
| E-HFO-1132 | Mass% | 0.0 | 20.0 | 45.0 | 45.0 | 45.0 | 60.0 | 60.0 |
| HFO-1123 | Mass% | 20.0 | 0.0 | 0.0 | 0.0 | 0.0 | 0.0 | 0.0 |
| R32 | Mass% | 15.0 | 25.0 | 0.0 | 15.0 | 25.0 | 0.0 | 17.5 |
| Propane | Mass% | 55.0 | 45.0 | 45.0 | 30.0 | 20.0 | 30.0 | 12.5 |
| HFO-1132a | Mass% | 10.0 | 10.0 | 10.0 | 10.0 | 10.0 | 10.0 | 10.0 |
| GWP | - | 103 | 170 | 2 | 103 | 170 | 2 | 119 |
| COP ratio | % (relative to R404A) | 102 | 100 | 102 | 100 | 100 | 101 | 100 |
| Refrigerating capacity ratio | % (relative to R404A) | 150 | 168 | 147 | 176 | 190 | 162 | 184 |
| Disproportionation reaction (3 Mpa) | - | - | - | - | - | - | Non-explosion | Explosion |

## Claims

**1.** A composition comprising a refrigerant,
the refrigerant comprising trans-1,2-difluoroethylene (HFO-1132(E)), propane, and 1,1-difluoroethylene (HFO-1132a) and optionally further comprising difluoromethane (R32),
wherein in the refrigerant, when the mass% of HFO-1132(E), R32, propane, and HFO-1132a based on their sum is respectively represented by x, y, z, and a (with the proviso that $0 < a \leq 10.0$), coordinates (x,y,z) in a ternary composition diagram in which the sum of HFO-1132(E), R32, and propane is (100 - a) mass% are within the range of a figure surrounded by straight lines CD, DR, RQ, QB, BA, and AC that connect the following 6 points:

point C (-a+60.0, 40.0, 0.0),
point D (-a+75.0, 0.0, 25.0),
point R ($0.0011a^2$-1.0794a+19.594, 0.0, $-0.0011a^2$+0.0794a+80.406),
point Q (0.0, $-0.0011a^2$-0.5366a+10.186, $0.0011a^2$-0.4634a+89.814),
point B (0.0, 44.2, -a+55.8), and
point A (-a+55.7, 44.3, 0.0)
or on the above straight lines CD, DR, RQ, and BA (excluding the points C, Q, B, and A).

**2.** The composition according to claim 1,
wherein the composition is an alternative composition for R410A.

**3.** A composition comprising a refrigerant,

the refrigerant comprising HFO-1132(E), propane, and HFO-1132a and optionally further comprising R32, wherein in the refrigerant, when the mass% of HFO-1132(E), R32, propane, and HFO-1132a based on their sum is respectively represented by x, y, z, and a (with the proviso that $0 < a \leq 10.0$), coordinates (x,y,z) in a ternary composition diagram in which the sum of HFO-1132(E), R32, and propane is (100 - a) mass% are within the range of a figure surrounded by straight lines ID, DF, FE, EH, and HI that connect the following 5 points:

point I (-a+66.7, 22.1, 11.2),
point D (-a+75.0, 0.0, 25.0),
point F (-1.104a+20.72, 0.0, 0.104a+79.28),
point E (0.0, $0.0011a^2$-0.6234a+11.514, $-0.0011a^2$-0.3766a+88.486), and
point H (0.0, 21.9, -a+78.1)
or on the above straight lines ID, DF, FE, and HI (excluding the points E and H).

**4.** The composition according to claim 3,
wherein the composition is an alternative composition for R1234yf.

**5.** A composition comprising a refrigerant,
the refrigerant comprising HFO-1132(E), propane, and HFO-1132a and optionally further comprising R32,

wherein in the refrigerant, when the mass% of HFO-1132(E), R32, propane, and HFO-1132a based on their sum is respectively represented by x, y, z, and a (with the proviso that $0 < a \leq 10.0$),
coordinates (x,y,z) in a ternary composition diagram in which the sum of HFO-1132(E), R32, and propane is (100 - a) mass% are within the range of a figure surrounded by straight lines ID, DM, ML, LH, and HI that connect the following 5 points when $0 < a \leq 5.0$:

point I (-a+66.7, 22.1, 11.2),
point D (-a+75.0, 0.0, 25.0),
point M ($0.136a^2$-1.74a+11.6, 0.0, $-0.136a^2$+0.74a+88.4),
point L (0.0, $0.0011a^2$-0.5994a+6.5943, $-0.0011a^2$-0.4006a+93.406), and
point H (0.0, 21.9, -a+78.1); and
the following 5 points when $5.0 < a \leq 10.0$,
point I (-a+66.7, 22.1, 11.2),
point D (-a+75.0, 0.0, 25.0),
point M ($-0.008a^2$-0.9a+11.0, 0.0, $0.008a^2$-0.1a+89.0),
point L (0.0, $0.0011a^2$-0.5994a+6.5943, $-0.0011a^2$-0.4006a+93.406), and

point H (0.0, 21.9, -a+78.1)
or on the above straight lines ID, DM, ML, and HI (excluding the points L and H).

**6.** The composition according to claim 5, wherein the composition is an alternative composition for R404A.

**7.** A refrigeration method comprising operating a refrigeration cycle using the composition of any one of claims 1, 3, and 5.

**8.** A refrigeration apparatus comprising the composition of any one of claims 1, 3, and 5 as a working fluid.

Fig. 1

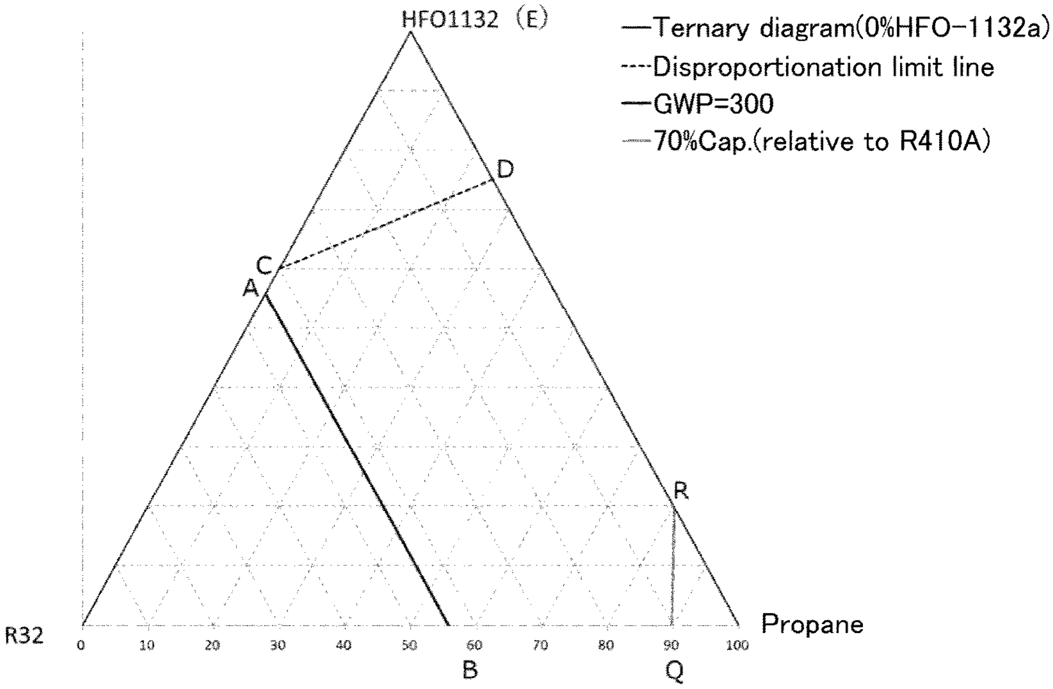
HFO1132 (E)
—Ternary diagram(0%HFO-1132a)
----Disproportionation limit line
—GWP=300
—70%Cap.(relative to R410A)
D
C
A
R
R32
Propane
0
10
20
30
40
50
60
70
80
90
100
B
Q

Fig. 2

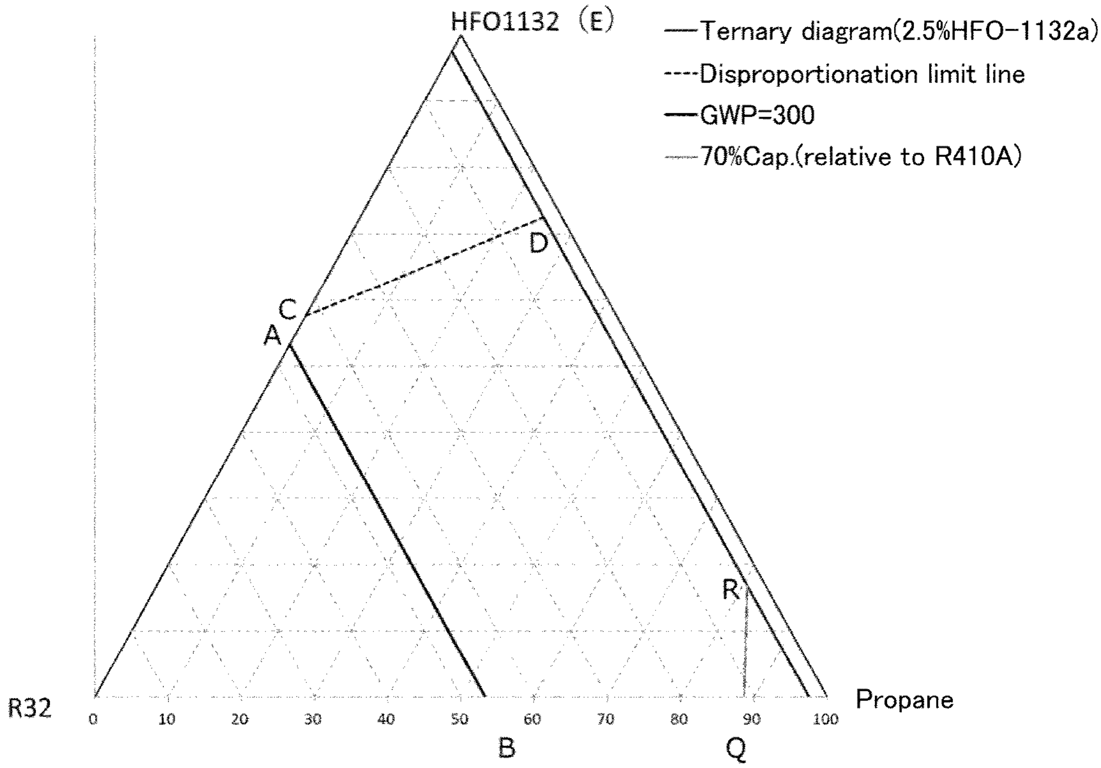
HFO1132 (E)
—Ternary diagram(2.5%HFO-1132a)
----Disproportionation limit line
—GWP=300
—70%Cap.(relative to R410A)
D
C
A
R
R32
0
10
20
30
40
50
60
70
80
90
100
Propane
B
Q

Fig. 3

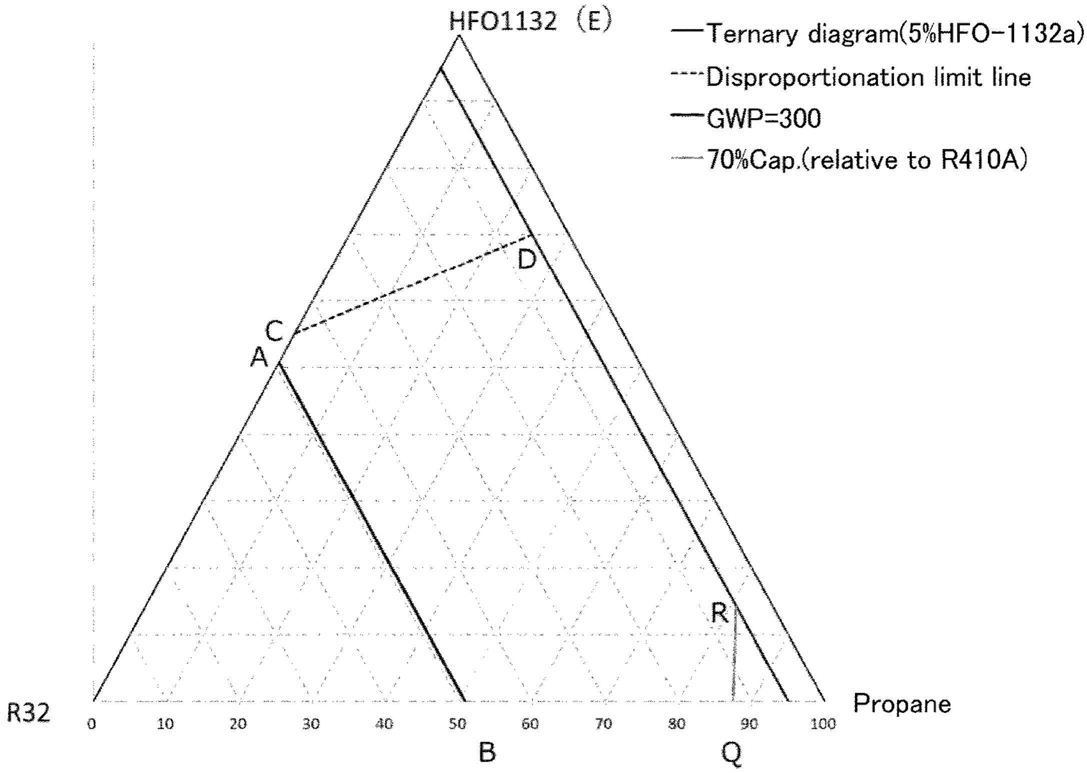
HFO1132 (E)
—Ternary diagram(5%HFO-1132a)
----Disproportionation limit line
—GWP=300
—70%Cap.(relative to R410A)
D
C
A
R
R32
0
10
20
30
40
50
60
70
80
90
100
Propane
B
Q

Fig. 4

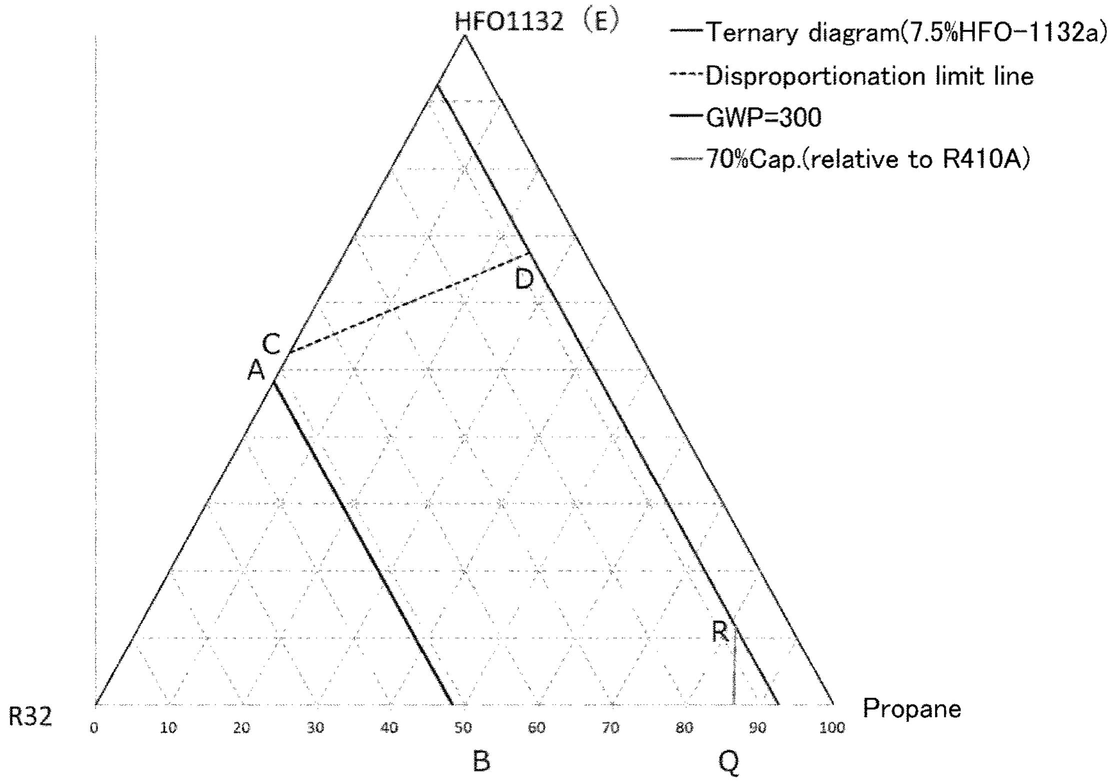
HFO1132 (E)
—Ternary diagram(7.5%HFO-1132a)
----Disproportionation limit line
—GWP=300
—70%Cap.(relative to R410A)
C
D
A
R
R32
0
10
20
30
40
50
60
70
80
90
100
Propane
B
Q

Fig. 5

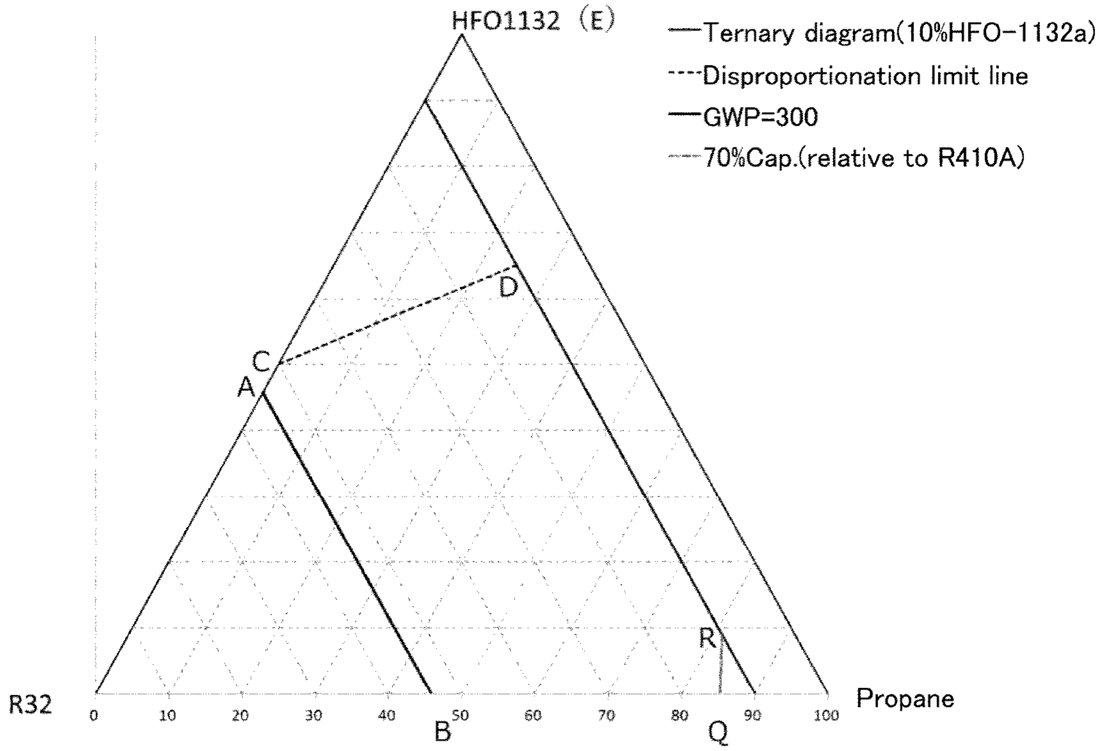
HFO1132 (E)
Ternary diagram(10%HFO-1132a)
Disproportionation limit line
GWP=300
70%Cap.(relative to R410A)
D
C
A
R
R32
0
10
20
30
40
50
60
70
80
90
100
Propane
B
Q

Fig. 6

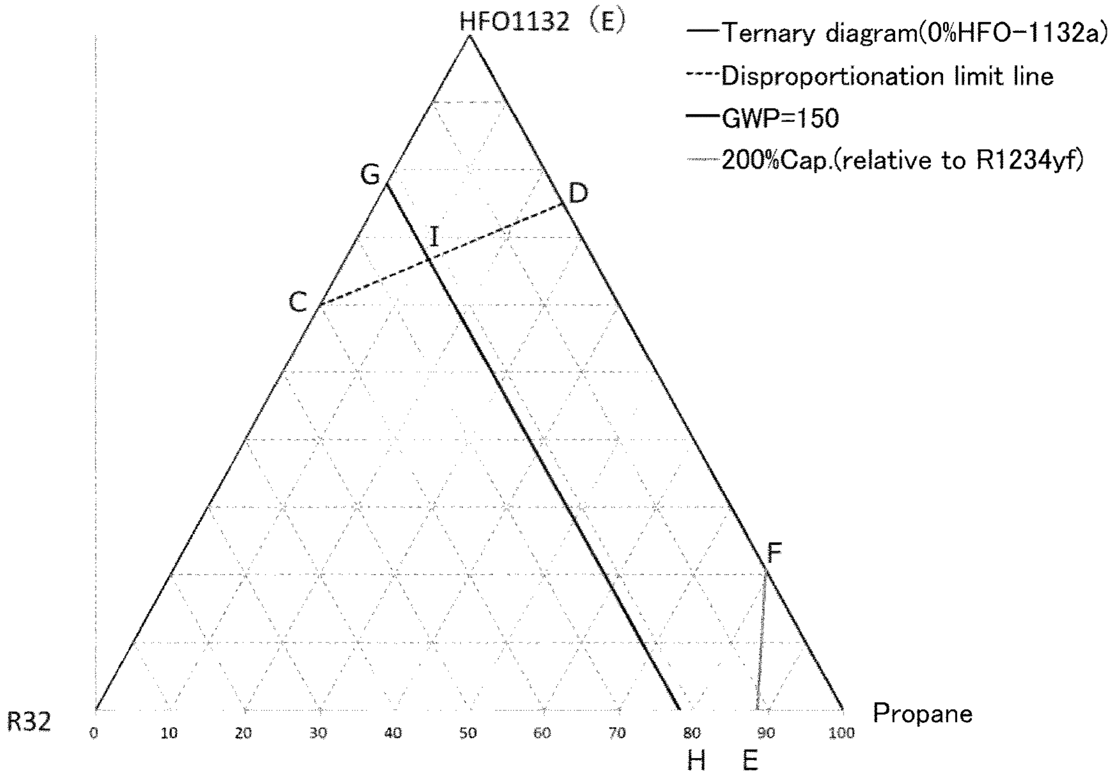
HFO1132 (E)
Ternary diagram(0%HFO-1132a)
Disproportionation limit line
GWP=150
200%Cap.(relative to R1234yf)
G
D
I
C
F
R32
Propane
0
10
20
30
40
50
60
70
80
90
100
H
E

Fig. 7

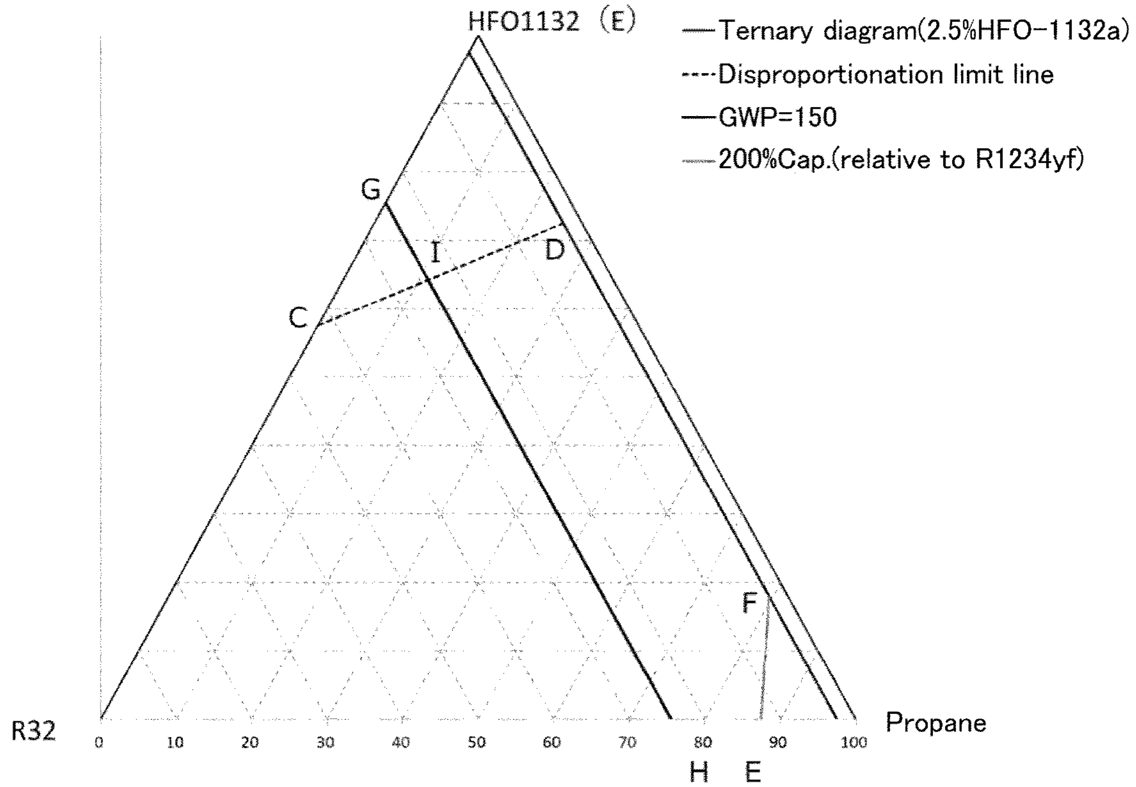
HFO1132 (E)
—Ternary diagram(2.5%HFO-1132a)
----Disproportionation limit line
—GWP=150
—200%Cap.(relative to R1234yf)
G
I
D
C
F
R32
0
10
20
30
40
50
60
70
80
90
100
Propane
H
E

Fig. 8

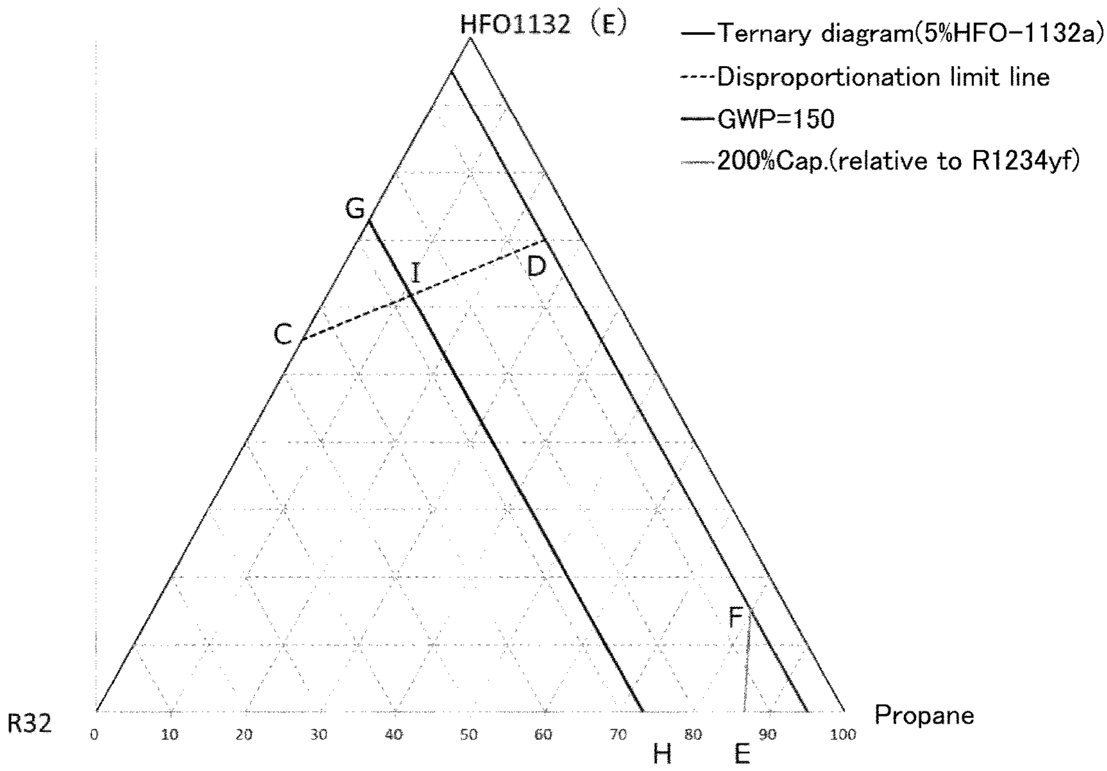
HFO1132 (E)
—Ternary diagram(5%HFO-1132a)
----Disproportionation limit line
—GWP=150
—200%Cap.(relative to R1234yf)
G
I
D
C
F
R32
Propane
0
10
20
30
40
50
60
70
80
90
100
H
E

Fig. 9

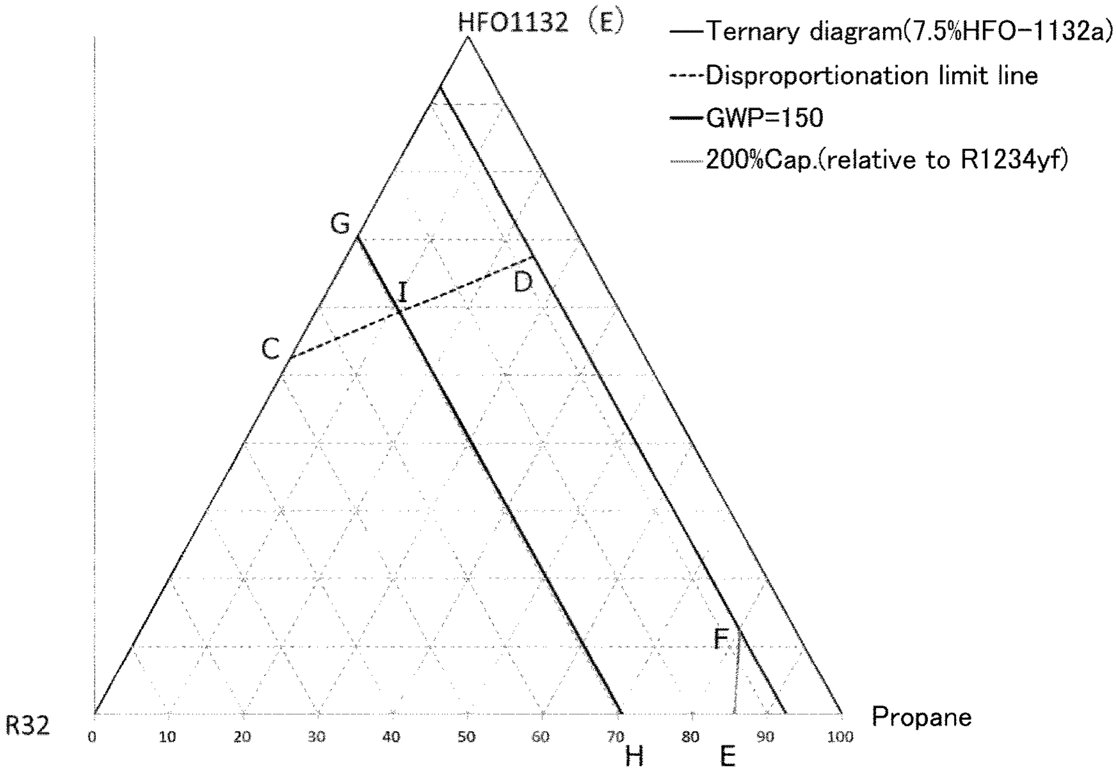
HFO1132 (E)
—Ternary diagram(7.5%HFO-1132a)
----Disproportionation limit line
—GWP=150
200%Cap.(relative to R1234yf)
G
I
D
C
F
R32
0
10
20
30
40
50
60
70
80
90
100
Propane
H
E

Fig. 10

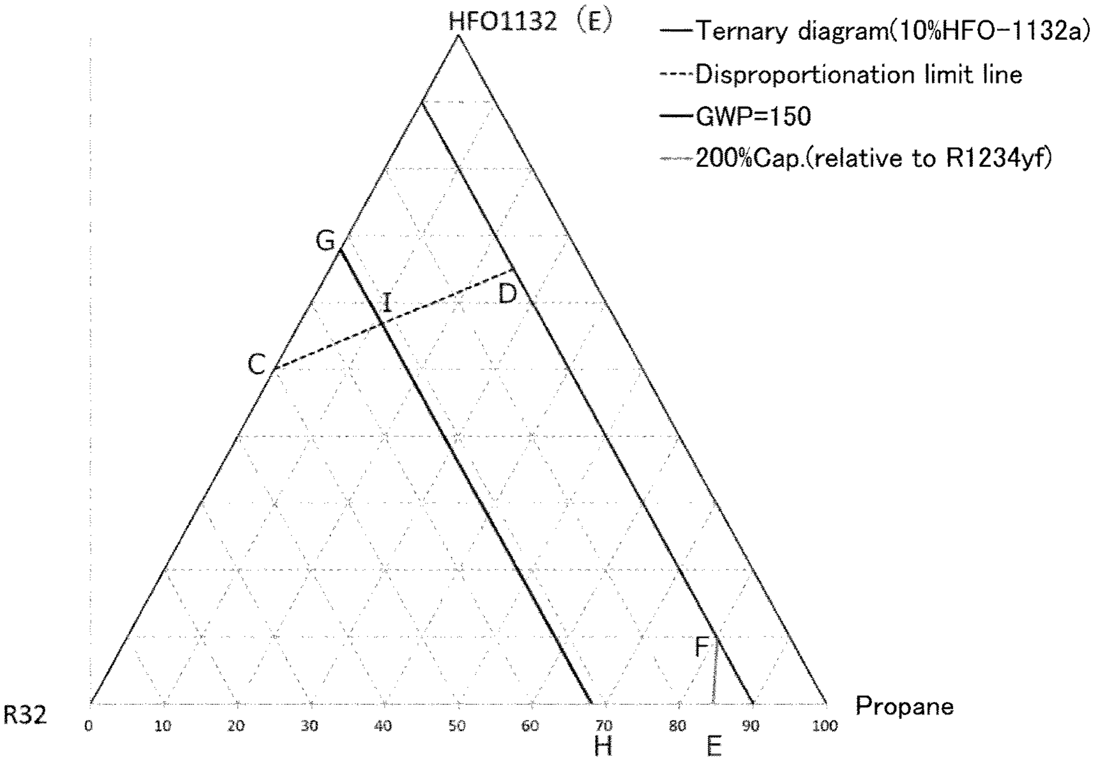
HFO1132 (E)
—Ternary diagram(10%HFO-1132a)
----Disproportionation limit line
—GWP=150
200%Cap.(relative to R1234yf)
G
I
D
C
F
R32
0
10
20
30
40
50
60
70
80
90
100
Propane
H
E

Fig. 11

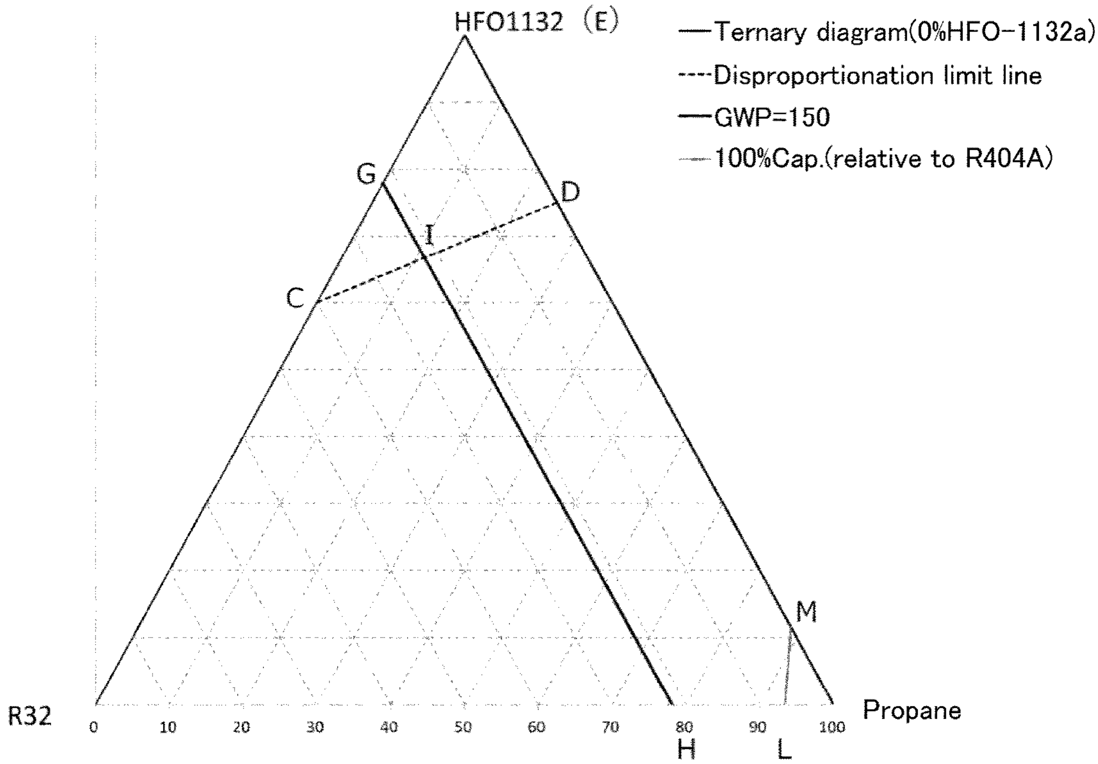
HFO1132 (E)
—Ternary diagram(0%HFO-1132a)
----Disproportionation limit line
—GWP=150
—100%Cap.(relative to R404A)
G
D
I
C
M
R32
0
10
20
30
40
50
60
70
80
90
100
Propane
H
L

Fig. 12

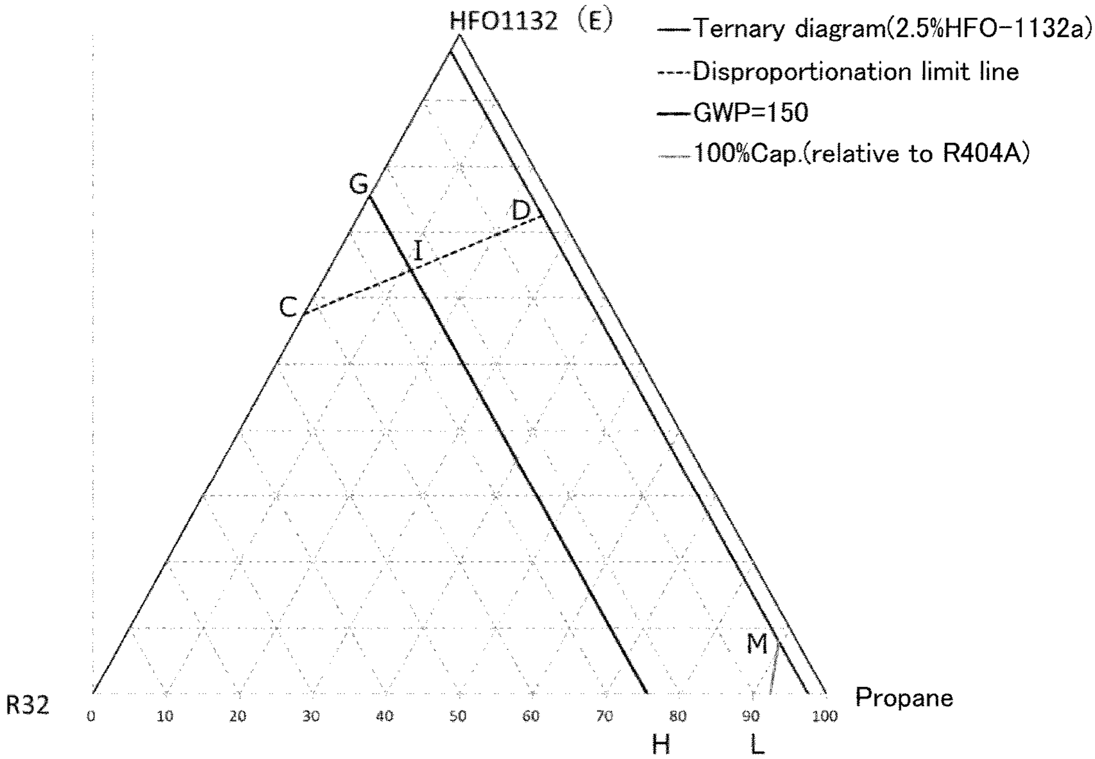
HFO1132 (E)
—Ternary diagram(2.5%HFO-1132a)
----Disproportionation limit line
—GWP=150
—100%Cap.(relative to R404A)
G
D
I
C
M
R32
0
10
20
30
40
50
60
70
80
90
100
Propane
H
L

Fig. 13

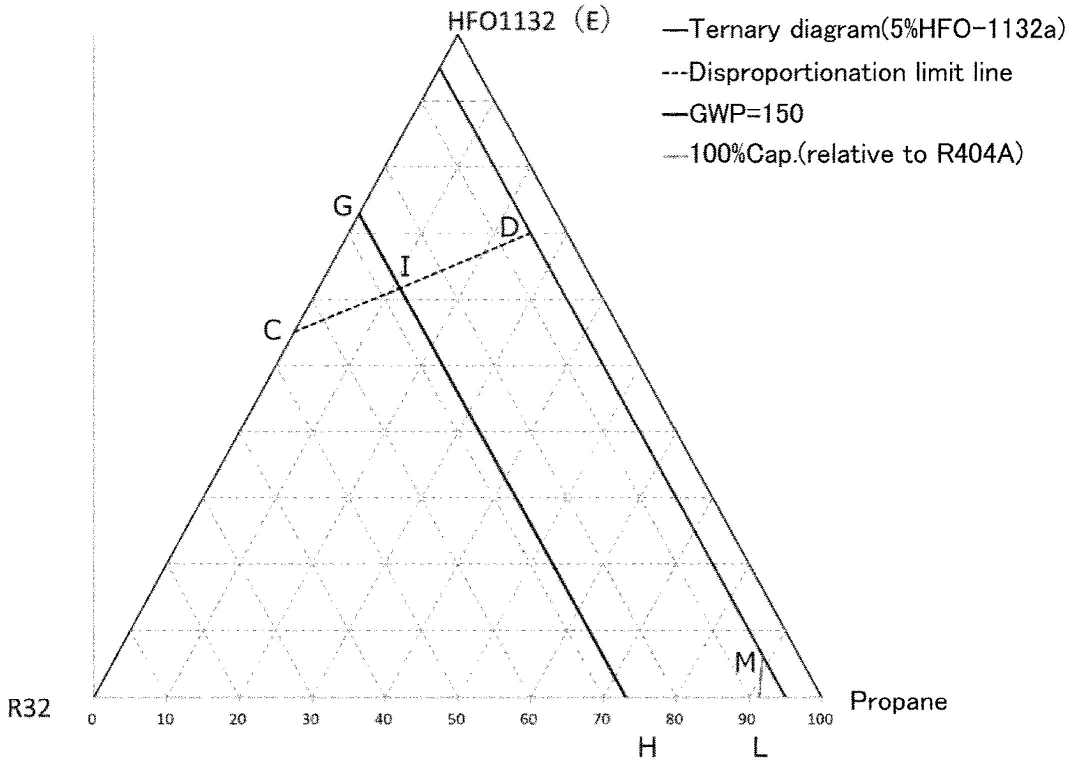
HFO1132 (E)
—Ternary diagram(5%HFO-1132a)
---Disproportionation limit line
—GWP=150
—100%Cap.(relative to R404A)
G
D
I
C
M
R32
0
10
20
30
40
50
60
70
80
90
100
Propane
H
L

Fig. 14

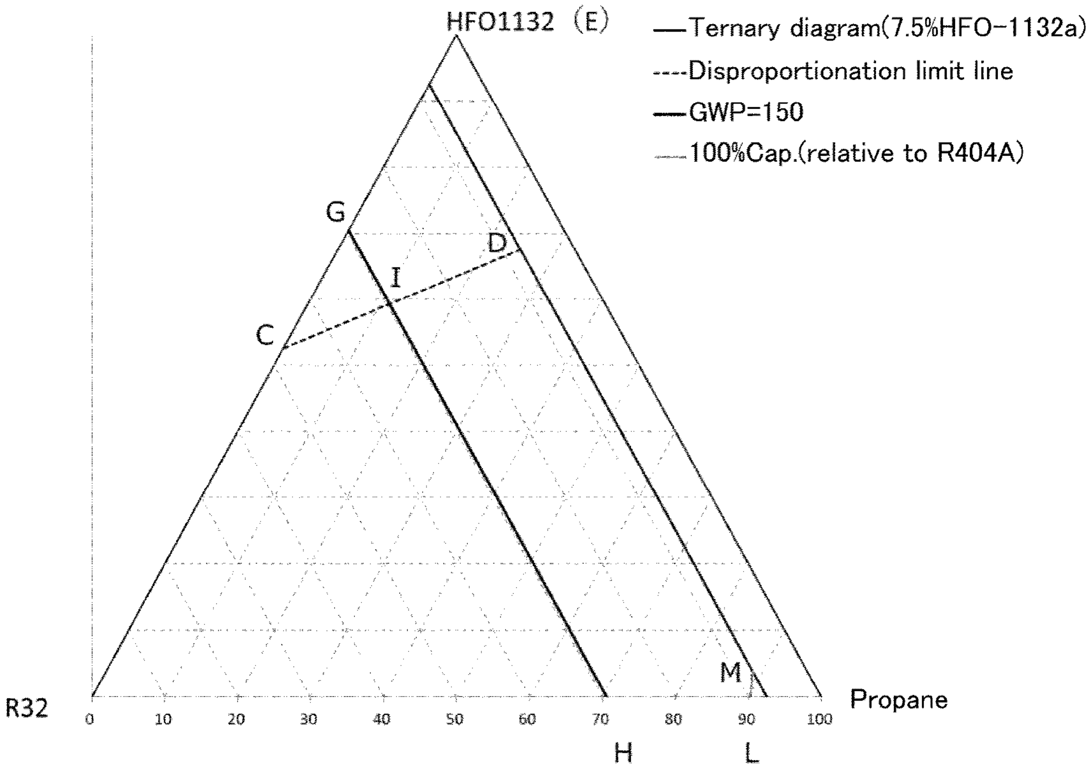
HFO1132 (E)
—Ternary diagram(7.5%HFO-1132a)
----Disproportionation limit line
—GWP=150
—100%Cap.(relative to R404A)
G
D
I
C
M
R32
Propane
0
10
20
30
40
50
60
70
80
90
100
H
L

Fig. 15

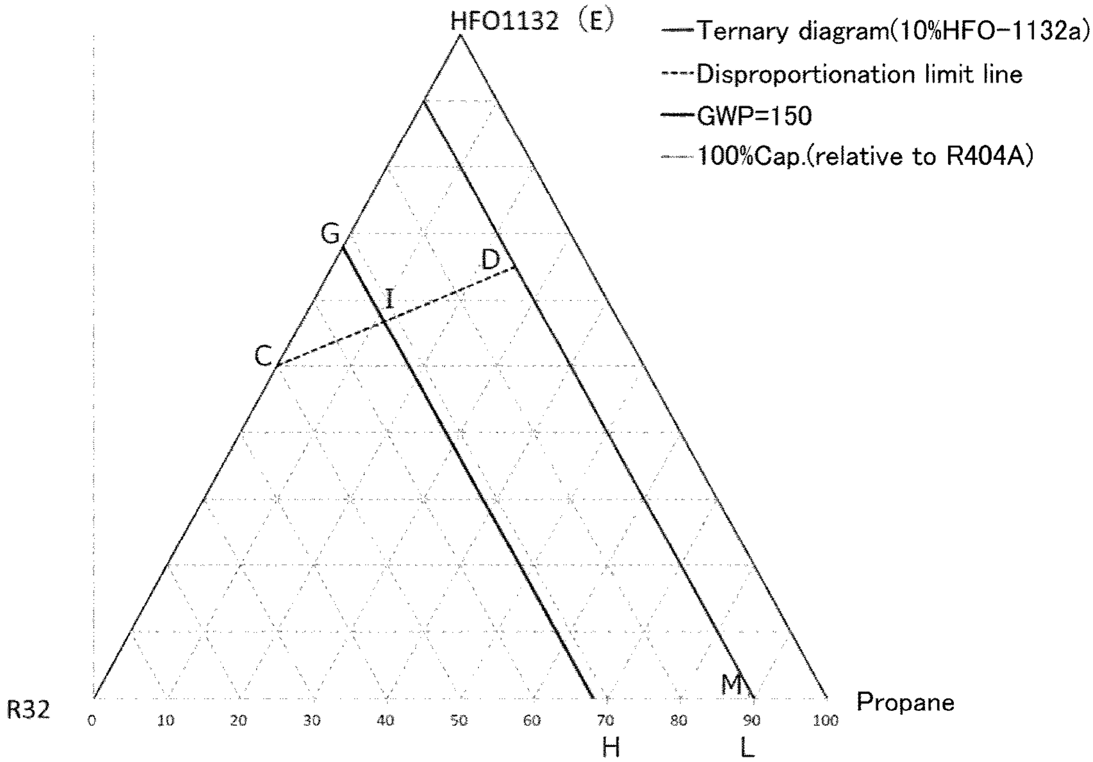
HFO1132 (E)
—Ternary diagram(10%HFO-1132a)
----Disproportionation limit line
—GWP=150
—100%Cap.(relative to R404A)
G
D
I
C
M
R32
Propane
0
10
20
30
40
50
60
70
80
90
100
H
L

## INTERNATIONAL SEARCH REPORT

International application No.
**PCT/JP2025/009903**

### A. CLASSIFICATION OF SUBJECT MATTER

***C09K 5/04***(2006.01)i; ***F25B 1/00***(2006.01)i
FI: C09K5/04 F; F25B1/00 396Z; F25B1/00 396G; C09K5/04 B; C09K5/04 E

According to International Patent Classification (IPC) or to both national classification and IPC

### B. FIELDS SEARCHED

Minimum documentation searched (classification system followed by classification symbols)

C09K5/04; F25B1/00

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2012/157765 A1 (ASAHI GLASS COMPANY, LIMITED) 22 November 2012 (2012-11-22)<br>claims, paragraphs [0093]-[0094], examples | 1-8 |
| Y | WO 2023/100746 A1 (AGC INC.) 08 June 2023 (2023-06-08)<br>claims, paragraphs [0401]-[0403] | 1-8 |
| Y | JP 2020-111742 A (DAIKIN INDUSTRIES, LTD.) 27 July 2020 (2020-07-27)<br>claims, paragraphs [0013]-[0014], [0018], [0023]-[0024], examples | 1-8 |
| A | JP 2022-021660 A (DAIKIN INDUSTRIES, LTD.) 03 February 2022 (2022-02-03)<br>paragraphs [0253]-[0254] | 1-8 |
| P, X | WO 2024/142557 A1 (DAIKIN INDUSTRIES, LTD.) 04 July 2024 (2024-07-04)<br>claims, paragraphs [0120]-[0121], [0136]-[0137], [0154]-[0155], examples, figures | 1-8 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 May 2025** | **27 May 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2025/009903**

| Patent document cited in search report | Publication date (day/month/year) | Patent family member(s) | Publication date (day/month/year) |
|---|---|---|---|
| WO 2012/157765 A1 | 22 November 2012 | US 2014/0077123 A1<br>claims, table 8, paragraph [0147], examples<br>US 2018/0002585 A1<br>US 2019/0330507 A1<br>US 2021/0095176 A1<br>US 2022/0380647 A1<br>US 2023/0183536 A1<br>US 2023/0183537 A1<br>EP 2711407 A1<br>CN 103547652 A<br>RU 2013156342 A<br>BR 112013029408 A | |
| WO 2023/100746 A1 | 08 June 2023 | US 2024/0318060 A1<br>claims, tables 264, 265<br>EP 4442787 A1<br>CN 118355089 A | |
| JP 2020-111742 A | 27 July 2020 | US 2021/0332279 A1<br>claims, paragraphs [0016]-[0017], [0024], [0031]-[0032], examples<br>WO 2020/145375 A1<br>EP 3910041 A1<br>CN 113348222 A<br>TW 202037585 A<br>TW 202330447 A | |
| JP 2022-021660 A | 03 February 2022 | (Family: none) | |
| WO 2024/142557 A1 | 04 July 2024 | JP 2024-95524 A<br>JP 2024-138333 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015141678 A